# EUROPEAN PATENT SPECIFICATION

(11) **EP 3 214 327 B1**
(45) Date of publication and mention of the grant of the patent: **15.04.2020**
(21) Application number: 15854403.1
(22) Date of filing: 28.10.2015
(51) Int. Cl.: F16C 33/66, B23B 19/02, B23Q 11/12, F16C 19/16, F16C 35/12, F16C 37/00, F16N 9/02, B23Q 1/70, C10M 159/06

(54) **BEARING DEVICE**
LAGERVORRICHTUNG
DISPOSITIF DE PALIER

(30) Priority: 29.10.2014 JP 2014220695; 29.10.2014 JP 2014220696; 29.10.2014 JP 2014220697; 29.10.2014 JP 2014220698; 29.09.2015 JP 2015191194; 29.09.2015 JP 2015191195; 29.09.2015 JP 2015191196; 29.09.2015 JP 2015191197
(43) Date of publication of application: 06.09.2017
(73) Proprietor: NSK Ltd., Tokyo 141-8560 (JP)
(72) Inventor: KATSUNO. Yoshiaki, Fujisawa-shi, Kanagawa 251-8501 (JP)
(74) Representative: Grünecker Patent- und Rechtsanwälte PartG mbB
(86) International application number: PCT/JP2015/080463
(87) International publication number: WO 2016/068216

(56) References cited:
- WO-A1-2009/110593
- JP-A- S63 167 125
- JP-A- 2001 050 284
- JP-A- 2001 208 085
- JP-A- 2003 105 366
- JP-A- 2008 240 828
- US-A1- 2003 069 147

## Description

### TECHNICAL FIELD

The present invention relates to a bearing device according to the preamble of claims 1 and 4. Such a bearing device is known from JP 2008 240 828 A (Patent Document 2). The present invention relates more particularly to a bearing device that can be stably lubricated with wax-containing lubricant over a long period.

### BACKGROUND ART

Recently, speed-up of a spindle device for a machine tool has been remarkably developed, and attention has been paid to grease lubrication as a lubrication method for bearings from the viewpoint of demands for environmental measures, energy saving, and resource saving. As the grease lubrication, there is known a method of lubricating with grease enclosed in a bearing space at the time of bearing assembling or a method of replenishing grease at appropriate timings from a grease replenishing unit provided outside a housing to perform lubrication.

For example, Patent Document 1 discloses a spindle system in which a small amount of grease is replenished at appropriate timings to a bearing space of a rolling bearing through a grease supply pipe and a grease supply path formed in the housing from the grease replenishing unit provided outside the housing. In the spindle system, a cooling passage is formed in the housing so as to secure an oil film of the bearing, and the rolling bearing as well as a motor stator is cooled by a cooling unit.

In addition, as a conventional bearing to be lubricated with grease, a grease reservoir part and a rolling bearing are disclosed in which the grease reservoir part is formed separately from the rolling bearing and disposed adjacently to a fixed-side raceway ring (for example, see Patent Document 2). As illustrated in Fig. 16, the grease reservoir part 100 disclosed in Patent Document 2 includes an annular container 101 in which a grease reservoir 102 is formed and an in-bearing insertion portion 103 which protrudes from the container 101 and is inserted to a vicinity of the raceway surface 111a of a fixed-side raceway ring 111 of the rolling bearing 110. A base oil oozing port 104 is provided at a tip of the in-bearing insertion portion 103, and grease G contained in the container 101 is supplied to the rolling bearing 110 from the base oil oozing port 104.

### PRIOR ART DOCUMENT

### PATENT DOCUMENT

Patent Document 1 : JP-B-4 051 563
Patent Document 2: JP-A-2008-240828

### SUMMARY OF THE INVENTION

### PROBLEMS TO BE SOLVED BY THE INVENTION

In the meantime, grease contains base oil, a thickener, and additives. In a method of replenishing the grease from the outside, relatively hard grease having a low worked penetration is used. When a pipe route in a housing is long or several portions are curved or bent at right angles in the middle of the pipe route, there was a concern that when the thickener solidifies, in some cases, the grease was not easily discharged to the bearing due to pipe resistance. Further, in order to supply the grease to the inside of the bearing from the outside of the housing, it was necessary to additionally form a supply path or a grease replenishing device in the housing, resulting in disadvantage in cost.

The grease reservoir part 100 and the rolling bearing 110 disclosed in Patent Document 2 are made by a combination of a plurality of parts having a complicated structure, which causes a manufacturing cost to increase. The supply of the grease G is performed by a method of supplying the base oil separated from the grease G from the grease base oil oozing port 104, using pressure fluctuation caused by a heat cycle in the grease reservoir 102 due to the operation/stop of the rolling bearing 110. Therefore, there is a possibility that lubrication may be insufficient for high-speed applications (dmn 500,000 or more, and more preferably dmn 1,000,000 or more) like a bearing for a main shaft of a machine merely by the pressure fluctuation due to the heat cycle.

The present invention has been made in view of the above circumstances, and an object thereof is to provide a bearing device in which wax-containing lubricant in place of the existing grease is enclosed to be changeable between a paste-like semi-solid state and a liquid state depending on an ambient temperature and lubrication can be performed over a long period.

### MEANS FOR SOLVING THE PROBLEM

The present invention suggests as a solution to the above object a bearing device with the features of claim 1 and a bearing device with the features of claim 4. Preferred embodiments of those bearing devices are defined in the dependent claims 2, 3, 5 and 6.

Further aspects of the present invention are:
(1) A bearing device including: a rolling bearing including an inner ring having an inner ring raceway surface on an outer circumferential surface thereof, an outer ring having an outer ring raceway surface on an inner circumferential surface thereof, and a plurality of rolling elements that are rollably disposed between the inner ring raceway surface and the outer ring raceway surface, wherein lubricant is enclosed in a bearing space between the outer circumferential surface of the inner ring and the inner circumferential surface of the outer ring; and an attachment member that is disposed adjacently to the rolling bearing, wherein the attachment member has a lubricant reservoir communicating with the bearing space, and wherein the lubricant reservoir encloses therein wax-containing lubricant that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point.
(2) The bearing device according to (1), wherein the attachment member is an outer ring spacer disposed in contact with an axial end face of the outer ring, wherein the outer ring spacer includes, on an inner circumferential surface thereof, an outer ring spacer-side flange portion extending inward in a radial direction and a cylindrical portion extending toward an axial end from an inner circumferential portion of the outer ring spacer-side flange portion, and wherein the lubricant reservoir is defined by the inner circumferential surface of the outer ring spacer, an axial end face of the outer ring spacer-side flange portion, and an outer circumferential surface of the cylindrical portion.
(3) The bearing device according to (1), wherein the attachment member is an outer ring presser that is disposed in contact with an axial end face of the outer ring and fixes the outer ring in an axial direction, and wherein the lubricant reservoir is a recess groove that is formed in an outer ring-side axial end face of the outer ring presser.
(4) A bearing device including: a rolling bearing including an inner ring having an inner ring raceway surface on an outer circumferential surface thereof, an outer ring having an outer ring raceway surface on an inner circumferential surface thereof, and a plurality of rolling elements that are rollably disposed between the inner ring raceway surface and the outer ring raceway surface, wherein lubricant is enclosed in a bearing space between the outer circumferential surface of the inner ring and the inner circumferential surface of the outer ring; an outer ring spacer that is disposed in contact with an axial end face of the outer ring; and an inner ring spacer that faces the outer ring spacer and is disposed in contact with an axial end face of the inner ring, wherein the inner ring spacer is provided with an inner ring spacer-side flange portion extending outward in a radial direction on a bearing-side outer circumferential surface of the inner ring space, wherein a lubricant reservoir is defined by the inner circumferential surface of the outer ring spacer, an axial end face of the inner ring spacer-side flange portion, and the outer circumferential surface of the inner ring spacer, wherein a large diameter labyrinth is formed between an outer circumferential surface of the inner ring spacer-side flange portion and an inner circumferential surface of the outer ring spacer and allows the lubricant reservoir to communicate with the bearing space, and wherein the lubricant reservoir encloses therein wax-containing lubricant that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point.
(5) The bearing device according to (4), wherein the inner circumferential surface of the outer ring spacer is provided with an outer ring spacer-side flange portion extending inward in a radial direction on an opposite side of the rolling bearing with respect to the inner ring spacer-side flange portion, and wherein the lubricant reservoir is provided between the large diameter labyrinth formed between the outer circumferential surface of the inner ring spacer-side flange portion and the inner circumferential surface of the outer ring spacer and a small diameter labyrinth formed between an inner circumferential surface of the outer ring spacer-side flange portion and the outer circumferential surface of the inner ring spacer.
(6) The bearing device according to (4) or (5), wherein the outer ring spacer is formed with a vent hole through which air is replenished, the vent hole allowing the lubricant reservoir to communicate with the outside.
(7) A bearing device including: a rolling bearing including an inner ring having an inner ring raceway surface on an outer circumferential surface thereof, an outer ring having an outer ring raceway surface on an inner circumferential surface thereof, and a plurality of rolling elements that are rollably disposed between the inner ring raceway surface and the outer ring raceway surface, wherein lubricant is enclosed in a bearing space between the outer circumferential surface of the inner ring and the inner circumferential surface of the outer ring; an outer ring spacer that is disposed in contact with an axial end face of the outer ring; and an inner ring spacer that faces the outer ring spacer and is disposed in contact with an axial end face of the inner ring, wherein a lubricant reservoir is defined between an inner circumferential surface of the outer ring spacer and an outer circumferential surface of the inner ring spacer, the inner circumferential surface of the outer ring spacer and the outer circumferential surface of the inner ring spacer have tapered surfaces that face each other and have a larger diameter toward the rolling bearing so as to form a labyrinth communicating from the lubricant reservoir to the bearing space, and wherein the lubricant reservoir encloses therein wax-containing lubricant that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point.
(8) The bearing device according to (7), wherein the rolling bearing includes a pair of rolling bearings, wherein the inner ring spacer includes a pair of inner ring spacers that are disposed in contact with axial end faces of the inner rings, respectively, wherein the lubricant reservoir is defined between the inner circumferential surface of the outer ring spacer and the outer circumferential surfaces of the pair of inner ring spacers, and wherein the inner circumferential surface of the outer ring spacer and the outer circumferential surfaces of the pair of inner ring spacers have tapered surfaces that face each other and have a larger diameter toward the rolling bearings so as to form a pair of labyrinths communicating from the lubricant reservoir to the bearing spaces.
(9) The bearing device according to (8), wherein the pair of inner ring spacers include inner ring spacer-side flange portions, each having an axially inside surface as the tapered surface and extending outward in a radial direction, and wherein an annular recess portion is formed on the inner circumferential surface of the outer ring spacer and defines the lubricant reservoir.
(10) The bearing device according to any one of (2) and (4) to (9), wherein the rolling bearing is an angular ball bearing, and wherein the outer ring spacer is disposed in contact with an axial end face of an anti-counter bore side of the outer ring.
(11) The bearing device according to any one of (1) to (10), wherein the wax-containing lubricant is reversibly changeable between the liquid state and the semi-solid state based on the liquefaction point.
(12) The bearing device according to any one of (1) to (11), wherein the bearing space encloses therein the wax-containing lubricant containing lubricating oil and wax and having a liquefaction point higher than the maximum temperature of the rolling bearing assumed during operation of the bearing device, and being changeable between a liquid state at a temperature exceeding the liquefaction point and a semi-solid state at a temperature equal to or lower than the liquefaction point.
(13) The bearing device according to any one of (1) to (11), wherein the bearing space encloses therein grease, and wherein the grease contains a base oil component having affinity and infiltration with the wax-containing lubricant.
(14) A spindle device including: a rolling bearing including an inner ring having an inner ring raceway surface on an outer circumferential surface thereof, an outer ring having an outer ring raceway surface on an inner circumferential surface thereof, and a plurality of rolling elements that are rollably disposed between the inner ring raceway surface and the outer ring raceway surface, wherein lubricant is enclosed in a bearing space between the outer circumferential surface of the inner ring and the inner circumferential surface of the outer ring; and a housing in which the outer ring is internally fitted and fixed, wherein the rolling bearing rotatably supports a main shaft with respect to the housing, wherein the housing is provided on an inner circumferential surface thereof with a circumferential groove that communicates with the bearing space and is formed along a circumferential direction, and wherein the circumferential groove encloses therein wax-containing lubricant that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point.
(15) The spindle device according to (14), further including an outer ring spacer that is disposed in contact with an axial end face of the outer ring, wherein a cutout is formed in a radial direction on an axial end face of the outer ring or an axial end face of the outer ring spacer to allow the circumferential groove to communicate with the bearing space.
(16) The spindle device according to (15), wherein the rolling bearing is an angular ball bearing, and wherein the outer ring spacer is disposed in contact with an axial end face of an anti-counter bore side of the outer ring.
(17) The spindle device according to any one of (14) to (16), wherein the wax-containing lubricant is reversibly changeable between the liquid state and the semi-solid state based on the liquefaction point.
(18) The spindle device according to any one of (14) to (17), wherein the bearing space encloses therein the wax-containing lubricant containing lubricating oil and wax and having a liquefaction point higher than the maximum temperature of the rolling bearing assumed during operation of the spindle device, and being changeable between a liquid state at a temperature exceeding the liquefaction point and a semi-solid state at a temperature equal to or lower than the liquefaction point.
(19) The spindle device according to any one of (14) to (17), wherein the bearing space encloses therein grease, and wherein the grease contains a base oil component having affinity and infiltration with the wax-containing lubricant.

The term "wax-containing lubricant" referred to in claims means lubricant containing lubricating oil and wax, and the term "liquefaction point" means a temperature at which the wax-containing lubricant W changes from a semi-solid state to a liquid state or from a liquid state to a semi-solid state. Further, the term "liquefaction point" follows, for example, "Rules for Regulations on Hazardous Substances in Japan", Chapter 12, Miscellaneous Provision 69-2 (liquid definition).

### EFFECTS OF THE INVENTION

According to the bearing device of claims 1 and 4 of the present invention, the bearing space formed between the inner ring and the outer ring of the rolling bearing communicates with the lubricant reservoir of the attachment member disposed adjacently to the rolling bearing. The lubricant such as the grease is enclosed in the bearing space, and the wax-containing lubricant is enclosed in the lubricant reservoir, the wax-containing lubricant containing the lubricating oil and the wax and being changeable between the liquid state at a temperature exceeding the liquefaction point which is a predetermined temperature within a temperature range of 10°C to 70°C and the semi-solid state at a temperature equal to or lower than the liquefaction point. Thus, the wax-containing lubricant moves to the bearing space by being liquefied based on the temperature of the bearing which changes according to the load of the rolling bearing, so that it is possible to lubricate the rolling bearing with the optimum amount of lubricating oil and to greatly prolong the lubrication life of the rolling bearing.

According to the bearing device of claim 1 of the present invention, the inner ring spacer-side flange portion extending outward in the radial direction is provided on the bearing-side outer circumferential surface of the inner ring spacer, and the lubricant reservoir is defined by the inner circumferential surface of the outer ring spacer, the axial end face of the inner ring spacer-side flange portion, and the outer circumferential surface of the inner ring spacer. The large diameter labyrinth formed between the outer circumferential surface of the inner ring spacer-side flange portion and the inner circumferential surface of the outer ring spacer allows the lubricant reservoir to communicate with the bearing space of the rolling bearing, and the wax-containing lubricant is enclosed in the lubricant reservoir, the wax-containing lubricant containing the lubricating oil and the wax and being changeable between the liquid state at a temperature exceeding the liquefaction point which is a predetermined temperature within a temperature range of 10°C to 70°C and the semi-solid state at a temperature equal to or lower than the liquefaction point. Thus, the wax-containing lubricant in the lubricant reservoir moves to the bearing space by being liquefied based on the temperature of the bearing which changes according to the load of the rolling bearing, so that it is possible to lubricate the rolling bearing with the optimum amount of lubricating oil and to greatly prolong the lubrication life of the rolling bearing.

According to the bearing device of claim 4 of the present invention, the lubricant reservoir is defined between the inner circumferential surface of the outer ring spacer and the outer circumferential surface of the inner ring spacer, and the inner circumferential surface of the outer ring spacer and the outer circumferential surface of the inner ring spacer respectively have the tapered surfaces which face each other and become larger in diameter toward the rolling bearing, to form the labyrinth communicating with the bearing space from the lubricant reservoir. The wax-containing lubricant is enclosed in the lubricant reservoir, the wax-containing lubricant contains the lubricating oil and the wax and is changeable between the liquid state at a temperature exceeding the liquefaction point which is a predetermined temperature within a temperature range of 10°C to 70°C and the semi-solid state at a temperature equal to or lower than the liquefaction point. Thus, the wax-containing lubricant in the lubricant reservoir moves to the bearing space by being liquefied based on the temperature of the bearing which changes according to the load of the rolling bearing, so that it is possible to lubricate the rolling bearing with the optimum amount of lubricating oil and to greatly prolong the lubrication life of the rolling bearing.

### BRIEF DESCRIPTION OF THE DRAWINGS

Fig. 1 is a sectional view illustrating main parts of a spindle device including a bearing device according to a first example that is important for understanding the present invention.
Fig. 2 is a sectional view of the bearing device according to the first example.
Fig. 3 is a sectional view of a bearing device according to a second example that is important for understanding the present invention.
Fig. 4 is a sectional view illustrating main parts of a spindle device including a bearing device according to a first embodiment of the present invention.
Fig. 5 is a sectional view of the bearing device according to the first embodiment of the present invention.
Fig. 6 is a sectional view of a bearing device according to a modified first embodiment of the present invention.
Fig. 7 is a sectional view of a bearing device according to a third example that is important for understanding the present invention.
Fig. 8 is a sectional view illustrating main parts of a spindle device including a bearing device according to a second embodiment of the present invention.
Fig. 9 is a sectional view of the bearing device according to the second embodiment of the present invention.
Fig. 10 is a sectional view of a bearing device according to a fourth example that is important for understanding the present invention.
Fig. 11 is a sectional view illustrating main parts of a spindle device according to a fifth example that is important for understanding the present invention.
Fig. 12 is an enlarged sectional view of a bearing device according to the fifth example assembled to the spindle device illustrated in Fig. 11.
Fig. 13 is a section view taken along line XIII-XIII in Fig. 12.
Fig. 14 is an enlarged sectional view of a spindle device according to a sixth example that is important for understanding the present invention, and corresponds to Fig. 12.
Fig. 15 is a diagram for explaining a liquefaction point.

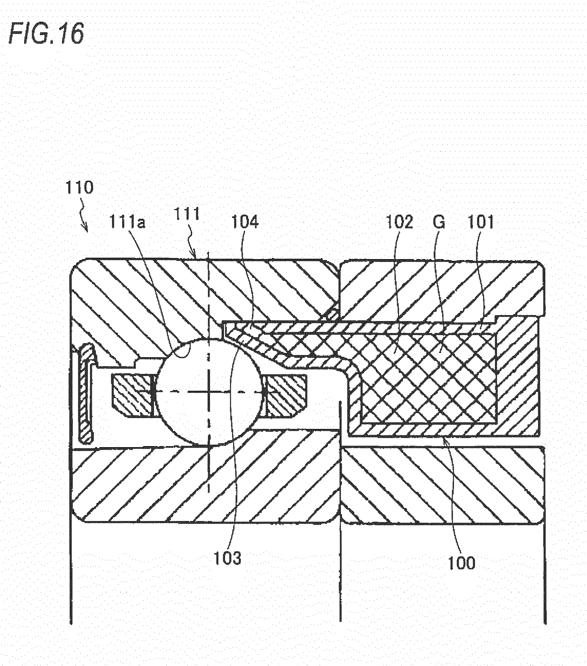

Fig. 16 is a sectional view of a conventional bearing device.

### DESCRIPTION OF EMBODIMENTS

Bearing devices and spindle devices will be described in detail below with reference to the drawings.

### (First Example)

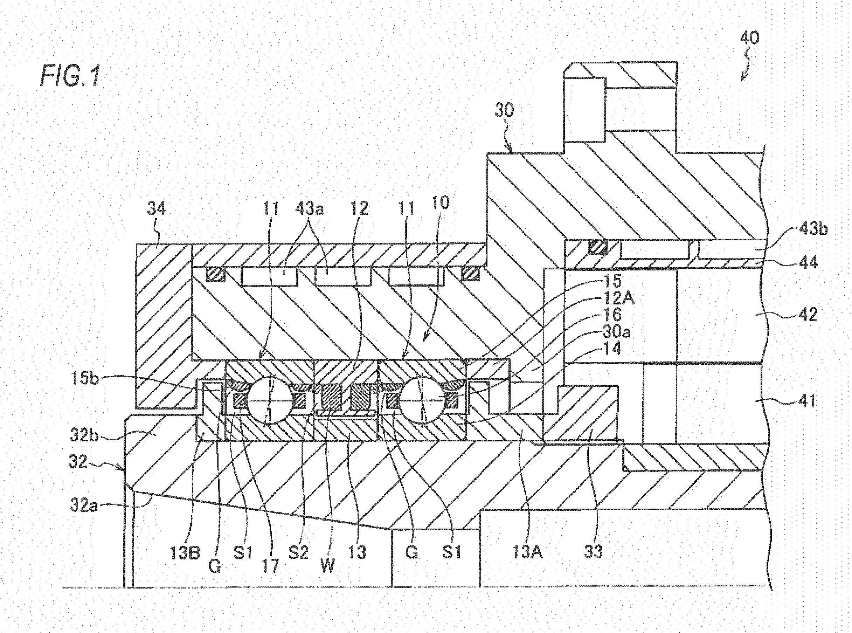

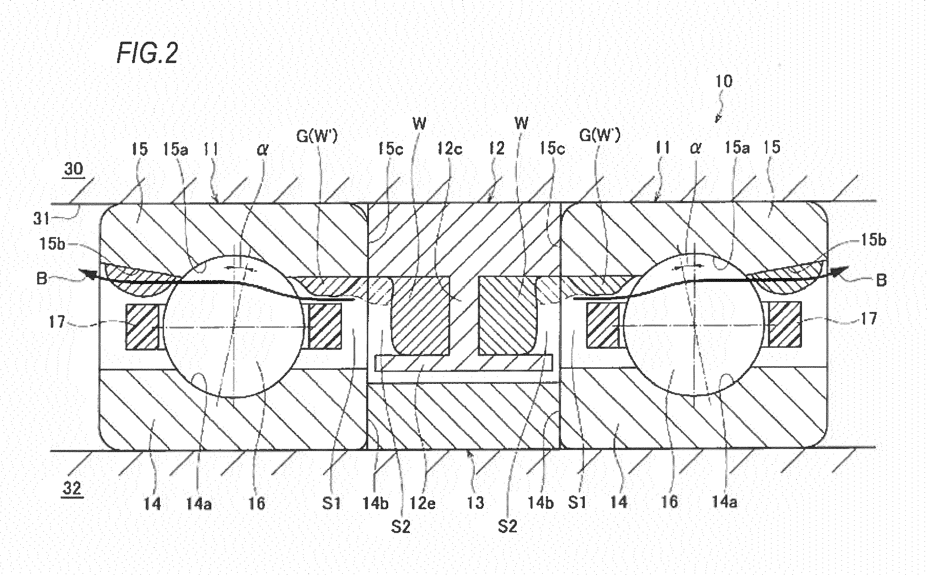

First, a bearing device according to a first example that is important for understanding the present invention will be described with reference to Figs. 1 and 2.

Fig. 1 is a sectional view illustrating main parts of a spindle device 40 for a machine tool in which a bearing device 10 according to this example is incorporated. In the spindle device 40, a main shaft 32 is rotatably supported by a pair of angular ball bearings 11 that supports a front end of the main shaft 32 and a rolling bearing (not illustrated) that supports a rear end of the main shaft 32. A tapered hole 32a for attaching a cutting tool holder (not illustrated) is provided on a tip (tool side) of the main shaft 32. A rotor 41 is externally fitted and fixed to a center in an axial direction of the main shaft 32. A stator 42 disposed around the rotor 41 is fixed to a housing 30 through a cooling jacket 44, and the main shaft 32 rotates by a rotational force of the rotor 41 generated when power is supplied to the stator 42.

Similarly, as illustrated in Fig. 2, the pair of angular ball bearings 11 each include an inner ring 14 having an inner ring raceway surface 14a on an outer circumferential surface thereof, an outer ring 15 having an outer ring raceway surface 15a on an inner circumferential surface thereof, and a plurality of balls 16 held by a retainer 17 and rollably disposed between the inner ring raceway surface 14a and the outer ring raceway surface 15a with a predetermined contact angle α, and the pair of angular ball bearings are disposed by back-to-back combination. A counter bore 15b is provided on an inner circumferential surface on an outer side in the axial direction of the outer ring 15.

The inner ring 14 of the pair of angular ball bearings 11 is externally fitted to the main shaft 32, is positioned with respect to a large-diameter stepped portion 32b on the tip of the main shaft 32 using the inner ring spacer 13 disposed between the pair of inner rings 14 and positioning sleeves 13A and 13B, and is fastened and fixed to the main shaft 32 by an inner ring fixing nut 33. In addition, the outer ring 15 of the pair of angular ball bearings 11 is internally fitted in a mounting hole 31 of the housing 30, is positioned with respect to an inward stepped portion 30a of the housing 30 using the outer ring spacer 12 disposed between the pair of outer rings 15 and a positioning sleeve 12A, and is positioned and fixed in the housing 30 by an outer ring presser 34.

The bearing device 10 of this example is constituted by the pair of angular ball bearings 11 and 11, the outer ring spacer 12, and the inner ring spacer 13 disposed between the pair of angular ball bearings 11 and 11.

The housing 30 and the cooling jacket 44 are provided with refrigerant supply paths 43a and 43b, for cooling the angular ball bearing 11 and the stator 42, on outer circumferences corresponding to the pair of angular ball bearings 11 and the stator 42, respectively. The pair of angular ball bearings 11 and the stator 42 are respectively cooled by refrigerant supplied to the refrigerant supply paths 43a and 43b from a refrigerant supply device (not illustrated), and a temperature thereof is controlled.

The outer ring spacer 12 is disposed in contact with an axial end face 15c on an anti-counter bore side of each outer ring 15. The outer ring spacer 12 includes an outer ring spacer-side flange portion 12c that extends inward in a radial direction at an axially intermediate portion of the inner circumferential surface thereof and a cylindrical portion 12e that extends toward both axial ends from an inner circumferential portion of the outer ring spacer-side flange portion 12c. A pair of lubricant reservoirs S2 are respectively defined by the inner circumferential surface of the outer ring spacer 12, the axial end face of the outer ring spacer-side flange portion 12c, and the outer circumferential surface of the cylindrical portion 12e. Each of the pair of lubricant reservoirs S2 communicates with a bearing space S1 of each angular ball bearing 11, and encloses wax-containing lubricant W. The wax-containing lubricant W will be described in detail below. In addition, an inner diameter of the inner circumferential surface of the outer ring spacer 12 is formed to be substantially equal to an inner diameter of the outer ring 15.

The inner ring spacer 13, which is constituted by the outer circumferential surface of a cylindrical surface, faces the outer ring spacer 12 and is in contact with an axial end face 14b of each inner ring 14.

Herein, when the bearing device 10 is incorporated in the housing 30, an appropriate amount of grease G is enclosed in the bearing space S1 between the outer circumferential surface of the inner ring 14 and the inner circumferential surface of the outer ring 15 in the angular ball bearing 11. In this example, however, an appropriate amount of wax-containing lubricant W is also enclosed in the lubricant reservoir S2.

An applicable example of the grease G enclosed in the bearing space 51 includes general grease, but may include grease having affinity and infiltration with the wax-containing lubricant W. For example, the grease is preferably configured to contain base oil having the same component as the lubricating oil of the wax-containing lubricant W. The amount of grease G enclosed in the bearing space S1 is preferably set to 10 to 20% of the space volume of the bearing space S1 from the balance between a temperature rise due to viscous resistance accompanying rotation and a service life of grease. Thus, it is possible to shorten a running-in operation time and to shorten a time of return to a production line after replacement the bearing.

The wax-containing lubricant W enclosed in the lubricant reservoir S2 contains the lubricating oil and the wax as a basic component, and it is sufficient that the wax-containing lubricant can change between the liquid state at a temperature exceeding the liquefaction point which is a predetermined temperature within a temperature range of 10°C to 70°C and the semi-solid state at a temperature equal to or lower than the liquefaction point. Preferably, the wax-containing lubricant W is adjusted to reversibly change between the liquid state and the semi-solidified state based on the liquefaction point.

The wax solidifies or semi-solidifies at a temperature lower than its melting point, and becomes a liquid state and has fluidity at a temperature higher than the melting point. In this way, when the wax is a single body, the wax reversibly changes to a semi-solid state and a liquid state as a whole at a temperature near the melting point of the wax. In contrast, the wax-containing lubricant W of the embodiment is a mixture (corresponding to a dilute solution obtained by addition of lubricating oil (dilute liquid) to wax (solute)) of lubricating oil (liquid) and wax (semi-solid). Therefore, the wax-containing lubricant W changes from a semi-solid state to a liquid state at a temperature lower than the melting point of the wax. The temperature (referred to as a liquefaction point) at which the semi-solid state changes to the liquid state is closely related to the melting point and a mixing ratio with the lubricating oil of the contained wax. That is, from the relation of the "melting point of the wax > liquefaction point", a liquefaction temperature can be controlled to a predetermined temperature equal to or lower than the melting point of the wax by the mixing ratio between the contained wax and the lubricating oil. Specifically, a temperature difference between the liquefaction point and the melting point of the wax can be brought to about 10°C to 30°C depending on the type of the lubricating oil and the wax and the mixing ratio therebetween. By adjustment of the type and the mixing ratio with the lubricating oil of the contained wax, it is also possible to reversibly change into the liquid state and the semi-solid state depending on the temperature.

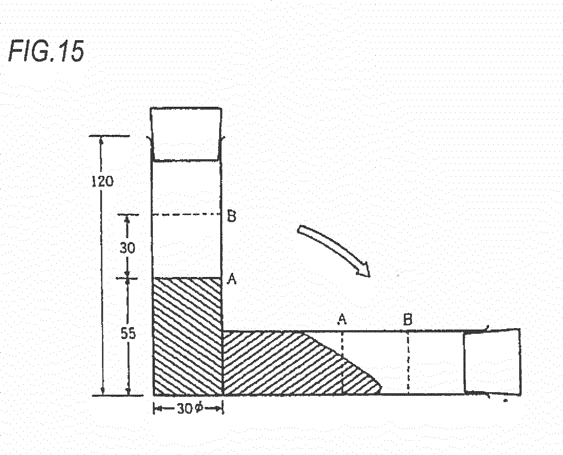

In the present invention, the liquid state and the liquefaction point was confirmed by Fig. 15 and the following methods. These methods follow "Rules for Regulations on Hazardous Substances in Japan", Chapter 12, Miscellaneous Provision 69-2 (liquid definition).
(1) Fill a test object (wax-containing lubricant) in two test tubes (diameter of 30 mm and height of 120 mm) up to a line A (height of 55 mm).
(2) Seal one test tube (test tube for liquid-state determination) with a rubber stopper not having holes.
(3) Seal the other test tube (test tube for temperature measurement) with a rubber stopper equipped with a thermometer. Herein, a tip of the thermometer is inserted up to a depth of 30 mm from a surface of the test object and is erected with respect to the test tube.
(4) Place two test tubes in a constant-temperature water bath maintained at a liquid-state confirmation temperature ± 0.1°C while erecting two test tubes such that a line B (30 mm above from the surface of the test object) thereof sinks under a water surface in the constant-temperature water bath.
(5) Keep a state as it is for 10 minutes after the temperature of the test object in the test tube for temperature measurement reaches the liquid-state confirmation temperature ± 0.1°C,
(6) Remove the test tube for liquid-state determination in an erected state on a horizontal table from the constant-temperature water bath, tilt immediately it on the table in a horizontal direction, and measure a time until the tip of the test object reaches the line B of the test tube.
(7) Determine that the test object is in a "liquid state" when the time until the test object reaches the line B is within 90 seconds.
(8) Perform (1) to (7) by variously changing the temperature of the constant-temperature water bath, and define a temperature at which the test object is in the liquid state as a "liquefaction point".

The liquefaction point is defined and digitized within a range of about ± 2°C with respect to a certain specific temperature rather than a fixed point temperature such as a freezing point of water (0°/pure water, under atmospheric pressure).

Alternatively, as a result obtained by measuring a change in viscosity according to a gradual temperature increase using a cone-plate viscometer (E-type viscometer), since a temperature at which the change in viscosity is constant appears near the liquefaction point, this temperature can be regarded as a liquefaction point.

As the lubricating oil applied to the wax-containing lubricant W, any lubricating oil can be used regardless of the type of synthetic oil or mineral oil or regardless of a single or a mixture. As the synthetic oil, any one of ester synthetic oil, hydrocarbon synthetic oil, and ether synthetic oil can be used. In addition, as the mineral oil, any one of paraffinic mineral oil and naphthenic mineral oil can be used.

Although viscosity of the lubricating oil may be within a general range, kinematic viscosity at 40°C is preferably 5 to 200 mm²/s in consideration of lubricity of the bearing. Further, kinematic viscosity of the lubricating oil is set depending on the application of the bearing. For example, in the rolling bearing for the machine tool main shaft, the kinematic viscosity of the lubricating oil is more preferably 10 to 130 mm²/s (40°C) so as to satisfy both low temperature rise characteristics and seizure resistance.

On the other hand, the wax is in a solid state or a semi-solid state at room temperature, and is an organic material having an alkyl group. As the wax of this embodiment, any wax can be used regardless of the type of natural wax or synthetic wax or regardless of a single or a mixture. However, since the wax becomes a mixture with the lubricating oil inside the bearing, it is preferred to have high compatibility with the lubricating oil. An example of the natural wax may include any one of animal/vegetable wax, mineral wax, and petroleum wax. An example of the synthetic wax may include any one of Fischer Tropsch wax, polyethylene wax, oil-based synthetic wax (esters, ketones, or amides), and hydrogenated wax.

As a preferable combination example of the lubricating oil and the wax, from the viewpoint of compatibility, microcrystalline wax can be used for the wax when ester oil is used as lubricating oil.

In addition, the mixing ratio between the lubricating oil and the wax is preferred that the content of the wax is 10 to 40 mass% and the content of the lubricating oil is 90 to 60 mass% with respect to the total amount of the lubricating oil and the wax. As the mixing ratio of the wax becomes larger, the fluidity becomes worse when the wax-containing lubricant is in the semi-solid state; when the mixing ratio of the wax exceeds 40 mass%, a discharge property from the lubricant supply device or transportability of the supply pipe becomes worse. Particularly, in a case where the fluidity is emphasized, preferably, the mixing ratio of the wax is set to be from 10 mass% to less than 20 mass% and the mixing ratio of the lubricating oil is set to be from more than 80 mass% to 90 mass%. The wax is added as an oiliness improver for lubricating oil or grease. In the wax-containing lubricant of the embodiment, however, the wax is added larger than the amount of general additives as described above to hold semi-solid properties (function as a thickener) equivalent to the grease.

Further, various additives can be added to the wax-containing lubricant W depending on the purpose. For example, any known oxidation inhibitor, a rust inhibitor, or an extreme pressure agent can be added in an appropriate amount.

The wax-containing lubricant W may be prepared in such a manner that the wax is heated to a temperature equal to or higher than the melting point to make it into a liquid state, the lubricating oil or the lubricating oil added with additives is added to the wax and sufficiently mixed with each other, and then the mixture is cooled to a temperature (usually, about a temperature equal to or lower than the liquefaction point) lower than the melting point of the wax. Alternatively, the wax-containing lubricant may be prepared in such a manner that the lubricating oil or the lubricating oil added with additives is placed with solid wax in a suitable container, heated to a temperature equal to or higher than the melting point of the wax, and mixed with each other, and then the mixture is cooled to a temperature equal to or lower than the liquefaction point.

In addition, the wax-containing lubricant W has characteristics in that a thickener is not contained therein like grease G and solidification does not occur even when a certain pressure is applied.

Basically, in view of an environmental temperature around the bearing or an operating temperature of the bearing, the liquefaction point is suitably 10°C to 70°C in general. However, in a case of the application to a rolling bearing for a machine tool (for example, a rolling bearing for a main shaft of a machine tool or a rolling bearing for supporting a ball screw shaft end), the liquefaction point is preferably 30°C to 70°C and more preferably 40°C to 70°C, for the reasons described below.

In order to ensure machining accuracy of a workpiece by minimizing thermal displacement of members due to the change of an ambient temperature, a surrounding environmental condition of the machine tool to be used is kept in air-conditioning management at about 20°C to 25°C in many cases. Accordingly, when a lower limit of the liquefaction point is set to 30°C, the machine tool is at a temperature equal to or lower than the liquefaction point in a stop state, the wax-containing lubricant W is kept in the inside of the bearing or an oil storage portion without being liquefied. Even when the bearing or the spindle, in which the wax-containing lubricant W is stored, is stopped or is stocked and stored in a stop state, the wax-containing lubricant is held in the inside and the periphery of the bearing without being liquefied, and thus a lubrication function is not impaired for a long period unlike ordinary grease. Therefore, the liquefaction point is preferably set to 30°C to 70°C.

In the spindle device 40, since an internal temperature of the angular ball bearing 11 rises as the rotational number increases, it is necessary to supply more lubricating oil to a rolling contact surface in order to maintain a proper lubrication state. In a continuous operation in normal rotation conditions (low-speed rotation range to medium-speed rotation range) or in a case of an operating condition in which low-speed rotation and maximum-speed rotation are alternately repeated, the temperature of the bearing is roughly 40°C or lower, and the lubricant around the rolling contact surface in the bearing space S1 is sufficient for the amount of lubricating oil.

However, in a case of a continuous machining at maximum-speed rotation or a continuous heavy cutting at a low rotational speed, the temperature of the bearing may exceed 40°C. In this case, only the lubricating oil existing in the bearing space S1 may be insufficient for the lubricating oil on the rolling contact surface. For this reason, the lower limit of the liquefaction point is set to 40°C; at this time, the wax-containing lubricant W in the lubricant reservoir S2 is liquefied to replenish the lubricating oil insufficient for the rolling contact surface, and thus it is possible to prevent trouble such as unexpected seizing in advance. As a result, excessive lubricant is not consumed in the low/medium-speed rotation range, and lubrication life can be further improved. Accordingly, the liquefaction point is more preferably set to 40°C to 70°C.

For example, an example of the wax-containing lubricant W having the liquefaction point of 47°C described above may include a wax-containing lubricant obtained by mixing 78.5 mass% of diester oil (dioctyl sebacate), 15 mass% of microcrystalline wax (melting point: 82°C), and 6.5 mass% of additives containing an oxidation inhibitor, an extreme pressure agent, and others.

In addition, an example of another wax-containing lubricant having a liquefaction point of 38°C may include a wax-containing lubricant obtained by mixing 83 mass% of diester oil (dioctyl sebacate), 10.5 mass% of microcrystalline wax (melting point: 72°C), and 6.5 mass% of additives containing an oxidation inhibitor, an extreme pressure agent, and others.

Thus, the wax-containing lubricant W is stored in a paste-like semi-solid state in the lubricant reservoir S2 before the operation of the main shaft or at an initial stage of the operation. However, when the internal temperature of the bearing gradually rises (becomes equal to or higher than the liquefaction point) due to the operation of the main shaft, a part of the wax-containing lubricant W communicating with the bearing space S1 in the vicinity of the bearing changes into liquid oil and gradually moves into the bearing space S1 of the angular ball bearing 11, thereby lubricating the angular ball bearing 11. Then, after the lubrication of the angular ball bearing 11, when being discharged from the angular ball bearing 11 and thus being lowered in temperature, the wax-containing lubricant changes into the paste-like semi-solid state again.

As described above, by adjustment of the component of the wax-containing lubricant W, the liquefaction point of the wax-containing lubricant W can be set to an arbitrary temperature within the range of 10°C to 70°C according to operating conditions of the angular ball bearing 11, that is, usage results of a rotary machine to be applied or the temperature of the bearing depending on a verification experiment and durability evaluation test. For example, microcrystalline wax has a melting point of 67 to 98°C, but a wax-containing lubricant mixed with the lubricating oil at the above mixing ratio has a liquefaction point which can be set to 35°C to 50°C. Although the paraffin wax has a melting point of 47°C to 69°C, a wax-containing lubricant mixed with the lubricating oil at the above mixing ratio has a liquefaction point which can be set to 20 to 35°C. Accordingly, it is possible to continuously supply the optimum amount of wax-containing lubricant W to the inside of the angular ball bearing 11.

In the spindle device 40, the angular ball bearing 11 is cooled by the refrigerant supplied to the refrigerant supply path 43a, and thus machining accuracy thereof is improved. In this case, even when the operating temperature (operating condition) of the angular ball bearing 11 is different, the temperature of the refrigerant is controlled such that the temperature of the spindle device 40 excluding the inside of the bearing and the vicinity of the bearing is equal to or lower than the liquefaction point. Therefore, the temperature of the refrigerant is controlled according to the operation temperature of the angular ball bearing 11, so that an appropriate amount of wax-containing lubricant W can be supplied to the angular ball bearing 11 by changing into liquid oil without the change of the wax-containing lubricant W.

In the angular ball bearing 11, as a ball rotates along a contact angle line as an equator, the ball exhibits a pump effect, and an air flow is generated in the space in which the lubricant is enclosed. For this reason, when the wax-containing lubricant W having good fluidity is used, it is possible to prevent the lubricant from staying in the bearing and to prevent a temperature rise of the bearing.

The operation of the bearing device 10 according to the example will be described below.

An appropriate amount of grease G is enclosed in the bearing space S1 of the bearing device 10, and an appropriate amount of wax-containing lubricant W is enclosed in the lubricant reservoir S2. As described above, the grease G contains the base oil having the same component as the wax-containing lubricant W and has affinity and infiltration with the wax-containing lubricant W. In addition, as illustrated in Fig. 1, the angular ball bearing 11 and its surroundings are controlled in temperature by the refrigerant supplied from a refrigerant supply device (not illustrated) and flowing in the refrigerant supply path 43a.

In the initial operation stage of the spindle device 40 in which the internal temperature of the angular ball bearing 11 is relatively low, the angular ball bearing 11 is lubricated by the grease G enclosed in the bearing space S1.

The base oil of the grease G is held by a thickener of fiber structure, and moves between the fibers of the thickener by capillary phenomenon. In a case where a spindle device of a machine tool rotates at a high speed, the temperature of the peripheral portion of the bearing rises, and thus the neighboring grease G is liquefied accompanying the temperature rise. Therefore, the flow of the base oil becomes easy, and the service life of the grease is prolonged at high-speed rotation.

When the internal temperature of the angular ball bearing 11 gradually rises as the bearing device 10 operates, a temperature gradient is generated in which a temperature gradually rises from the outer ring spacer 12 and the inner ring spacer 13 toward the angular ball bearing 11. Then, when the temperature of the wax-containing lubricant W enclosed in the lubricant reservoir S2 communicating with the grease G enclosed in the bearing space S1 in the vicinity of the angular ball bearing 11 reaches the liquefaction point, for example, 47°C, liquefaction of the wax-containing lubricant W is started, and the base oil is gradually supplied to the angular ball bearing 11.

Further, a phenomenon of sucking (so-called a pumping action) air into the counter bore 15b occurs (see an arrow B) in the angular ball bearing 11 having the counter bore 15b in the outer ring 15. Therefore, airflow flows due to the pumping action of the angular ball bearing 11, and the lubricating oil of the wax-containing lubricant W liquefied in the lubricant reservoir S2 moves to the bearing space S1. Thus, the lubricating oil of the wax-containing lubricant W is also used for the lubrication of the angular ball bearing 11.

The grease G in the bearing space S1 is not liquefied, and thus can maintain the service life of the grease with ordinary grease lubrication. However, since the grease G has poor fluidity, the grease G contributing to the lubrication of the angular ball bearing 11 is limited to the base oil component in the grease G closest to the angular ball bearing 11. On the other hand, when the wax-containing lubricant W of this example is used, the wax-containing lubricant W changes the semi-solid state to the liquid state due to the heat generation or the temperature rise of the angular ball bearing 11. For this reason, the lubricating oil of the wax-containing lubricant W liquefied in the lubricant reservoir S2 infiltrates and moves into the grease G in the angular ball bearing 11, and is gradually supplied into the angular ball bearing 11. As a result, it is possible to greatly prolong the lubrication life by oil replenishing action from the wax-containing lubricant W.

The lubricant reservoir S2 of the example is formed in such a manner that the outer ring spacer 12 and the inner ring spacer 13 are disposed between the angular ball bearings 11 and 11 and the outer ring spacer 12 has a U-shaped groove in section to face the angular ball bearings 11 and 11, and thus can appropriately hold the wax-containing lubricant W.

Since an inner diameter dimension of the outer ring 15 is substantially the same as that of the outer ring spacer 12, if the wax-containing lubricant W is also applied (enclosed) to a connecting portion between the inner diameter surface of the outer ring 15 and the inner diameter surface of the outer ring spacer 12 to communicate with each other, it is preferred because lubricating oil of the wax-containing lubricant W infiltrates and moves, and the lubricating oil of the wax-containing lubricant W in the lubricant reservoir S2 can also smoothly move to the angular ball bearing 11.

Further, as the angular ball bearing 11 rotates at a high speed, more lubricating oil is required in the rolling contact portion or the retainer guide surface. On the other hand, the temperature of the angular ball bearing 11 rises as the rotational speed increases, this heat is transmitted to the outer ring spacer 12, so that the liquefaction ratio of the wax-containing lubricant W in the lubricant reservoir S2 advances, and thus more lubricating oil is supplied to the angular ball bearing 11. This makes it possible to improve lubricating performance of the angular ball bearing 11 at high-speed rotation. That is, when the optimum liquefaction point is set, an appropriate amount of lubricating oil is automatically controlled and replenished corresponding to the rotational speed even when a command is not given from the outside.

In addition, when the rotational speed of the bearing is equal to or higher than a predetermined rotational speed, if the liquefaction point is set such that the wax-containing lubricant W is liquefied and the lubricating oil is replenished, it is possible to increase the amount of lubricating oil supplied at the time of high-speed rotation equal to or higher than the predetermined rotational speed, and improve seizure resistance. Further, at the time of low-speed rotation where the amount of oil is not so necessary, the replenishment of the lubricating oil can be stopped. That is, when the liquefaction point is set to a higher temperature than the internal temperature of the bearing at the time of the low-speed rotation and the rotational speed becomes equal to or higher than a required rotational speed at which the lubricating oil is necessary, the wax-containing lubricant W is liquefied and the liquefaction point thereof is adjusted so that the lubricating oil is replenished. This makes it possible to significantly prolong the service life of the lubricant.

Furthermore, when the temperature of the bearing falls within a certain range, for example, when the angular ball bearing 11 has a relatively low operating temperature and no cooling structure is required, or when the rolling bearing continuously operates at a constant rotational speed at all times, the liquefaction point of the wax-containing lubricant W is set according to the temperature of the bearing to be assumed, and thus it is possible to prolong the lubrication life by optimizing the amount of wax-containing lubricant W to be replenished.

In this example, the grease G having affinity and infiltration with the wax-containing lubricant W is enclosed in the inside (bearing space) of the angular ball bearing 11, but another wax-containing lubricant W' instead of the grease G may be enclosed in the inside of the angular ball bearing 11. In this case, if another wax-containing lubricant W' is set to have a liquefaction point (for example, a liquefaction point of 70°C) higher than the assumed maximum operating temperature (for example, around max. 65°C) of the angular ball bearing 11, another wax-containing lubricant W' in the angular ball bearing 11 is constantly maintained in a semi-solid state. That is, another wax-containing lubricant W' behaves similarly to the normal grease G, and lubricates the angular ball bearing 11.

If the liquefaction point of another wax-containing lubricant W' is set to be lower than the assumed maximum operating temperature, there are concerns when the operating temperature exceeds the liquefaction point that liquefaction of another wax-containing lubricant W' proceeds and the lubricant in the angular ball bearing 11 flows out to the outside. In this case, another wax-containing lubricant W' may contribute only to initial lubrication at a low operating temperature. However, the above problems can be avoided when the liquefaction point of another wax-containing lubricant W' is set to a temperature higher than the maximum operating temperature.

As described above, according to the bearing device 10 of this example, the bearing space S1 formed between the inner ring 14 and the outer ring 15 of the angular ball bearing 11 communicates with the lubricant reservoir S2 of the outer ring spacer 12 disposed adjacently to the angular ball bearing 11. The lubricant such as the grease G is enclosed in the bearing space S1, and the wax-containing lubricant W is enclosed in the lubricant reservoir S2, the wax-containing lubricant W containing the lubricating oil and the wax and being changeable between the liquid state at a temperature exceeding the liquefaction point which is a predetermined temperature within a temperature range of 10°C to 70°C and the semi-solid state at a temperature equal to or lower than the liquefaction point. Thus, the wax-containing lubricant W is liquefied based on the temperature of the bearing which changes according to the load of the angular ball bearing 11, so that it is possible to lubricate the angular ball bearing 11 with the optimum amount of lubricating oil and to greatly prolong the lubrication life of the angular ball bearing 11.

The outer ring spacer 12 includes the outer ring spacer-side flange portion 12c that extends inward in the radial direction and the cylindrical portion 12e that extends toward both axial ends from the inner circumferential portion of the outer ring spacer-side flange portion 12c, at the inner circumferential surface thereof. The lubricant reservoir S2 is defined by the inner circumferential surface of the outer ring spacer 12, the axial end face of the outer ring spacer-side flange portion 12c, and the outer circumferential surface of the cylindrical portion 12e, and thus can suitably hold the wax-containing lubricant W regardless of the shape of the inner ring spacer 13.

In addition, since the outer ring spacer 12 is disposed in contact with the axial end face 15c on the anti-counter bore side of the outer ring 15 of the angular ball bearing 11, the lubricating oil of the wax-containing lubricant W in the lubricant reservoir S2 moves to the bearing space S1 due to the flow of air caused by the pumping action of the angular ball bearing 11, and the lubrication life thereof can be prolonged.

### (Second Example)

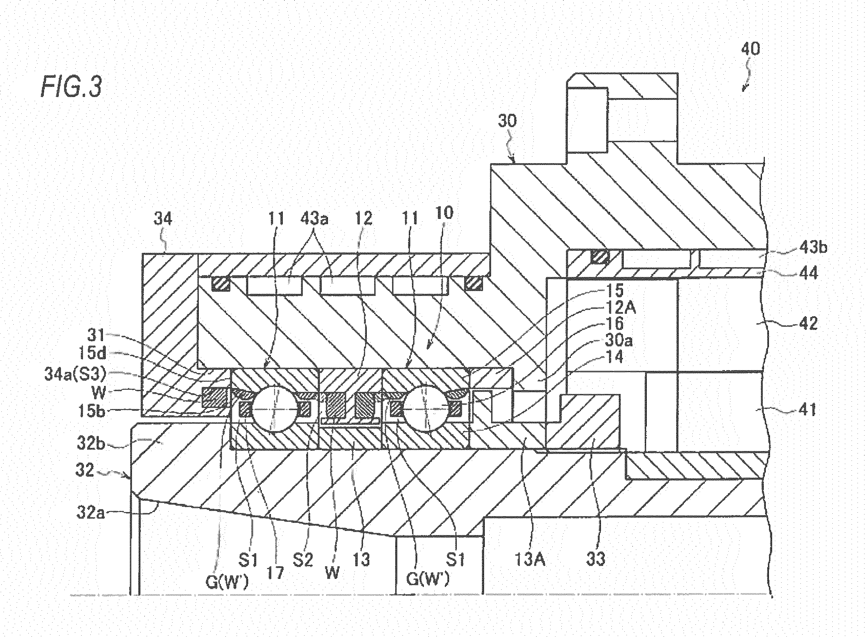

A bearing device according to a second example will be described with reference to Fig. 3.

In a bearing device 10 of this example, an annular groove 34a having an U-shaped section on a side of an angular ball bearing 11 is provided in an outer ring presser 34 that is disposed in contact with an axial end face 15d of an outer ring 15 and fixes the outer ring 15. The annular groove 34a is a second lubricant reservoir S3, and encloses wax-containing lubricant W therein. Similarly to the bearing device 10 according to the first example, the wax-containing lubricant W is enclosed in a lubricant reservoir S2 formed in the outer ring spacer 12, and grease G is enclosed in a bearing space S1 between an outer circumferential surface of an inner ring 14 and an inner circumferential surface of the outer ring 15. Another wax-containing lubricant W' can be enclosed in the bearing space S1.

Then, a temperature rise of the angular ball bearing 11 accompanying rotation of a main shaft 32 causes a temperature gradient from the outer ring 15 to the outer ring presser 34. When the temperature of the outer ring presser 34 rises to a temperature equal to higher than a liquefaction point, the wax-containing lubricant W in the second lubricant reservoir S3 is slowly liquefied, and lubricating oil of the wax-containing lubricant W is replenished to the angular ball bearing 11 in addition to lubricating oil of the wax-containing lubricant W in the lubricant reservoir S2. An inner circumferential surface of the annular groove 34a has substantially the same inner diameter as an opening of a counter bore 15b of the angular ball bearing 11, and thus movement and replenishment of lubricant becomes easy.

In this example, the second lubricant reservoir S3 formed in the outer ring presser 34 is disposed on a front side of the angular ball bearings 11 disposed by back-to-back combination. The counter bore 15b is formed on the front side of the angular ball bearing 11, and a considerable amount of grease G or another wax-containing lubricant W' also remains between an outer-diameter surface of a retainer 17 and the inner circumferential surface of the outer ring 15. Thus, the wax-containing lubricant W in the second lubricant reservoir S3 is more likely to communicate with the grease G on the angular ball bearing 11 (bearing space S1) side or another wax-containing lubricant W', and movement and replenishment of lubricant becomes easy.

Other configurations and operational effects are the same as those of the first example.

### (First Embodiment)

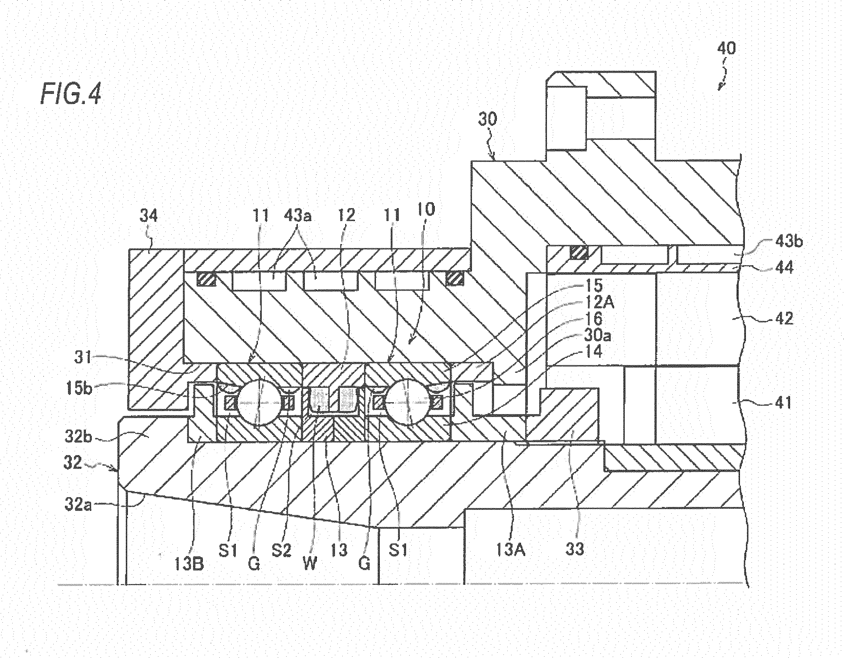

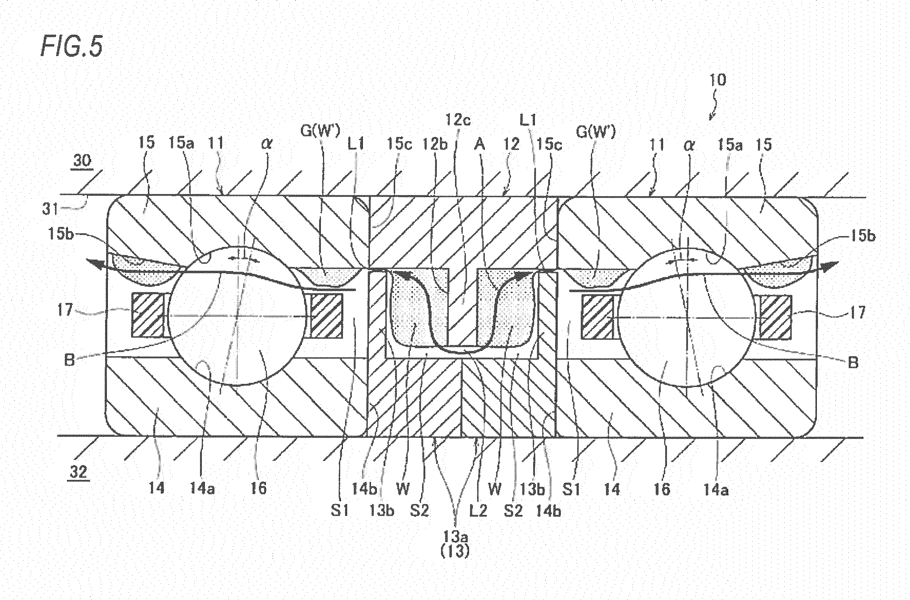

A bearing device according to a first embodiment of the present invention will be described below with reference to Figs. 4 and 5. In this embodiment, a configuration of an outer ring spacer 12 and an inner ring spacer 13 is different from that in the first example. In this embodiment, therefore, the configuration of the outer ring spacer 12 and the inner ring spacer 13 will be mainly described, and the same or equivalent parts as those in the first example are denoted by the same reference numerals and the description thereof will be omitted or simplified.

In this embodiment, as illustrated in Figs. 4 and 5, the outer ring spacer 12 is disposed in contact with an axial end face 15c on an anti-counter bore side of each outer ring 15. An outer ring spacer-side flange portion 12c extending inward in a radial direction is provided at an axially intermediate portion of an inner circumferential surface of the outer ring spacer 12, an inner diameter of the rest of the inner circumferential surface is formed to be substantially equal to the inner diameter of the outer ring 15. The outer ring spacer-side flange portion 12c is not necessarily required to have a longitudinally long rectangular shape in section as illustrated in the drawing, but may have, for example, a trapezoidal shape in section, an inverted trapezoidal shape in section, or a circular arc shape in section.

From the viewpoint of assembly, the inner ring spacer 13 is divided into a pair of inner ring spacers 13a having the same configuration. Each of the inner ring spacers 13a faces the outer ring spacer 12, and is in contact with each other on a radially inner side of the outer ring spacer-side flange portion 12c while being in contact with an axial end face 14b of each inner ring 14. Further, the inner ring spacers 13 respectively include inner ring spacer-side flange portions 13b, extending outward in the radial direction, on the outer circumferential surface thereof at a side of the bearings 11. A division position of the inner ring spacers 13 may be an axial position except the flange portion 13b.

Therefore, a large diameter labyrinth L1 with a minute clearance is formed between the outer circumferential surface of each inner ring spacer-side flange portion 13b and the inner circumferential surface of the outer ring spacer 12, and a small diameter labyrinth L2 with a minute clearance is formed between the inner circumferential surface of the outer ring spacer-side flange portion 12c and the outer circumferential surface of the inner ring spacer 13. Then, a pair of lubricant reservoirs S2 are formed between the large diameter labyrinth L1 and the small diameter labyrinth L2 so as to communicate with bearing spaces S1 of the angular ball bearings 11 through the large diameter labyrinths L1 by the inner circumferential surface of the outer ring spacer 12 and the axial end face 12b of the outer ring spacer-side flange portion 12c, on an inner diameter side of the outer ring spacer 12. Wax-containing lubricant W containing lubricating oil and wax is enclosed in the lubricant reservoir S2.

It is more effective for the clearance of the labyrinth L1 or L2 to be narrower, but the clearance is preferably 0.15 to 1.0 mm at a radial distance perpendicular to the axial direction in consideration of interference between the outer and inner ring spacers 12 and 13 or part machining accuracy.

Herein, when the bearing device 10 is incorporated in a housing 30, an appropriate amount of grease G is enclosed in the bearing space S1 between the outer circumferential surface of the inner ring 14 and the inner circumferential surface of the outer ring 15 in the angular ball bearing 11. In this embodiment, however, an appropriate amount of wax-containing lubricant W is further enclosed in the lubricant reservoir S2.

The operation of the bearing device 10 according to this embodiment will be described below.

An appropriate amount of grease G is enclosed in the bearing space S1 of the bearing device 10, and an appropriate amount of wax-containing lubricant W is enclosed in the lubricant reservoir S2. As described above, the grease G contains the base oil having the same component as the wax-containing lubricant W and has affinity and infiltration with the wax-containing lubricant W. In addition, as illustrated in Fig. 4, the angular ball bearing 11 and its surroundings are controlled in temperature by the refrigerant supplied from a refrigerant supply device (not illustrated) and flowing in the refrigerant supply path 43a.

In the initial operation stage of the spindle device 40 in which the internal temperature of the angular ball bearing 11 is relatively low, the angular ball bearing 11 is lubricated by the grease G enclosed in the bearing space S1.

The base oil of the grease G is held by a thickener of a fiber structure, and moves between the fibers of the thickener by capillary phenomenon. In a case where the spindle device 40 of the machine tool rotates at a high speed, the temperature of the peripheral portion of the bearing rises, and thus the neighboring grease G is liquefied accompanying the temperature rise. Therefore, the flow of the base oil becomes easy, and the service life of the grease is prolonged at high-speed rotation.

When the internal temperature of the angular ball bearing 11 gradually rises as the bearing device 10 operates, a temperature gradient is generated in which a temperature gradually rises from the outer ring spacer 12 and the inner ring spacer 13 toward the angular ball bearing 11. Then, when the temperature of the wax-containing lubricant W enclosed near the angular ball bearing 11 in the lubricant reservoir S2 reaches the liquefaction point, for example, 47°C, liquefaction of the wax-containing lubricant W is started.

On the other hand, since the large diameter labyrinth L1 and the small diameter labyrinth L2 having different radial positions are provided between the outer circumferential surfaces of the respective inner ring spacers 13 and the inner circumferential surface of the outer ring spacer 12, when the inner ring spacer 13 rotates at a high speed with high-speed rotation of the angular ball bearing 11, a circumferential air flow is generated in each of the labyrinths L1 and L2 due to a circumferential speed of the outer circumferential surface of the inner ring spacer 13. As the circumferential speed is higher, a negative pressure operation tends to occur, and a pressure at the large diameter labyrinth L1 is smaller than a pressure at the small diameter labyrinth L2. Thus, the air flows toward the large diameter labyrinth L1 from the small diameter labyrinth L2 (see an arrow A). Accordingly, the large diameter labyrinth L1 is provided at the bearing side, the small diameter labyrinth L2 is provided at the anti-bearing side, and thus the air can flow toward the bearing.

Further, a phenomenon of sucking (so-called a pumping action) air into the counter bore 15b occurs (see an arrow B) in the angular ball bearing 11 having the counter bore 15b in the outer ring 15.

Therefore, by the flow of air flowing into the angular ball bearing 11 from the large diameter labyrinth L1 between the inner ring spacer 13 and the outer ring spacer 12 and the flow of air due to the pumping action of the angular ball bearing 11, the lubricating oil of the wax-containing lubricant W liquefied in the lubricant reservoir S2 moves to the bearing space S1 and is replenished to the grease G in the bearing space S1.

Furthermore, since the clearance of the large diameter labyrinth L1 is narrow, the lubricating oil of the wax-containing lubricant W in the lubricant reservoir S2 moves and is replenished to the bearing space S1 by a capillary phenomenon of the large diameter labyrinth L1.

The grease G in the bearing space S1 is not liquefied, and thus can maintain the service life of the grease with ordinary grease lubrication. However, since the grease G has poor fluidity, the grease G contributing to the lubrication of the angular ball bearing 11 is limited to the base oil component in the grease G closest to the angular ball bearing 11. On the other hand, when the wax-containing lubricant W of this embodiment is used, the wax-containing lubricant W changes the semi-solid state to the liquid state due to the heat generation or the temperature rise of the angular ball bearing 11. For this reason, the lubricating oil of the wax-containing lubricant W in the lubricant reservoir S2 infiltrates and moves into the grease G in the angular ball bearing 11 from the lubricant reservoir S2 by the air flow in the bearing device 10 and the capillary phenomenon of the large diameter labyrinth L1, and is gradually supplied into the angular ball bearing 11. As a result, it is possible to greatly prolong the lubrication life by oil replenishing action from the wax-containing lubricant W.

Since an inner diameter dimension of the outer ring 15 is substantially the same as that of the outer ring spacer 12, if the wax-containing lubricant W is also applied (enclosed) to a connecting portion between the inner diameter surface of the outer ring 15 and the inner diameter surface of the outer ring spacer 12 to communicate with each other, it is preferred because lubricating oil of the wax-containing lubricant W infiltrates and moves, and the lubricating oil of the wax-containing lubricant W in the lubricant reservoir S2 can also smoothly move to the angular ball bearing 11.

Further, as the angular ball bearing 11 rotates at a high speed, more lubricating oil is required in the rolling contact portion or the retainer guide surface. On the other hand, the temperature of the angular ball bearing 11 rises as the rotational speed increases, this heat is transmitted to the outer ring spacer 12, so that the liquefaction ratio of the wax-containing lubricant W in the lubricant reservoir S2 advances, and thus more lubricating oil is supplied to the angular ball bearing 11. This makes it possible to improve lubricating performance of the angular ball bearing 11 at high-speed rotation. That is, when the optimum liquefaction point is set, an appropriate amount of lubricating oil is automatically controlled and replenished corresponding to the rotational speed even when a command is not given from the outside.

Even in this embodiment, the grease G having affinity and infiltration with the wax-containing lubricant W is enclosed in the inside (bearing space) of the angular ball bearing 11, but another wax-containing lubricant W' instead of the grease G may be enclosed in the inside of the angular ball bearing 11.

As described above, according to the bearing device 10 of this embodiment, the outer ring spacer 12 includes the lubricant reservoir S2 defined to communicate with the bearing space S1 on the inner diameter side thereof, and the wax-containing lubricant W is enclosed in the lubricant reservoir S2, the wax-containing lubricant W containing the lubricating oil and the wax and being changeable between the liquid state and the semi-solid state at a predetermined temperature within a temperature range of 10°C to 70°C. Thus, the lubricating oil of the wax-containing lubricant W liquefied in the lubricant reservoir S2 moves to the bearing space S1 at the time of a running-in operation or by the air flow, so that it is possible to lubricate the angular ball bearing 11 with the optimum amount of lubricating oil and to greatly prolong the lubrication life of the angular ball bearing 11.

In addition, the inner ring spacer 13 includes the pair of inner ring spacers 13a respectively having the inner ring spacer-side flange portion 13b extending outward in the radial direction on the bearing-side outer circumferential surface, the outer ring spacer-side flange portion 12c extending inward in the radial direction is provided at the axially intermediate portion of the inner circumferential surface of the outer ring spacer 12, and the pair of lubricant reservoirs S2 are respectively provided between the large diameter labyrinths L1 formed between the outer circumferential surfaces of the respective inner ring spacer-side flange portions 13b and the inner circumferential surface of the outer ring spacer 12 and the small diameter labyrinth L2 formed between the inner circumferential surface of the outer ring spacer-side flange portion 12c and the outer circumferential surface of the inner ring spacer 13. Thereby, the lubricating oil of the wax-containing lubricant W in the lubricant reservoir S2 moves to the bearing space S1 by the flow of air flowing into the angular ball bearing 11 from the large diameter labyrinth L1 between the inner ring spacer 13 and the outer ring spacer 12, the flow of air due to the pumping action of the angular ball bearing 11, and the capillary phenomenon of the large diameter labyrinth L1, and thus the lubrication life can be prolonged.

The large diameter labyrinth L1 or the small diameter labyrinth L2 on the bearing side is tapered to have a large diameter, and thus a pressure difference occurs between the labyrinths L1 and L2, and the air flow more easily occurs from the anti-bearing side to the bearing side.

Other configurations and operational effects are the same as those of the first example.

### <Modified first embodiment>

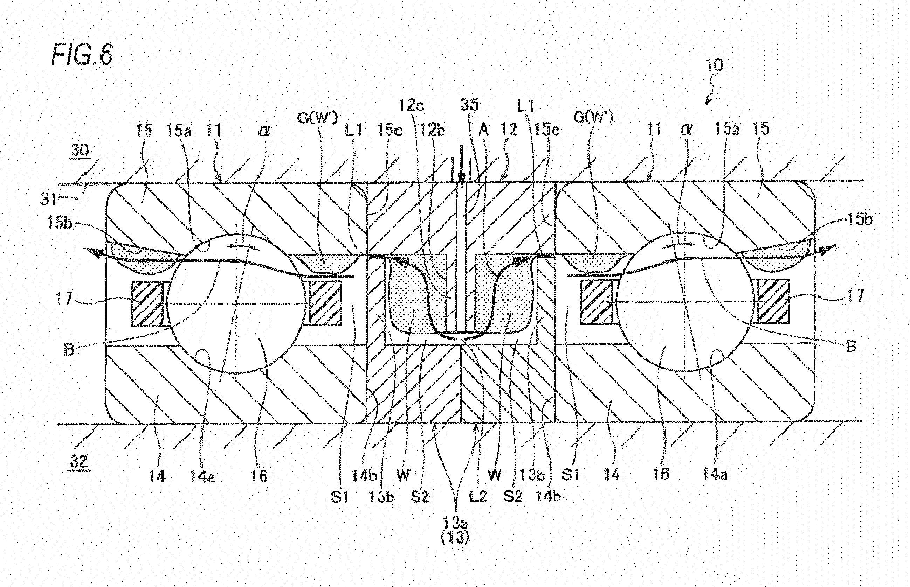

Fig. 6 illustrates a sectional view of a bearing device according to a modified first embodiment. In the modified example, a vent hole 35 is formed extending radially in the outer ring spacer 12 to penetrate through the outer ring spacer-side flange portion 12c provided at an axial center and to replenish air by allowing the lubricant reservoir S2 to communicate with the outside.

Accordingly, by the air flow caused by the rotation of the main shaft 32, the lubricating oil of the wax-containing lubricant W liquefied in the lubricant reservoir S2 flows into a rolling surface of the outer ring 15 together with the air flow and lubricates the bearing. In the modified example, the air is replenished to the clearance between the outer and inner ring spacers 12 and 13 from the vent hole 35, and thus the air can be easily sucked into the pair of angular ball bearings 11.

Other configurations and operational effects are the same as those of the first embodiment.

### (Third Example)

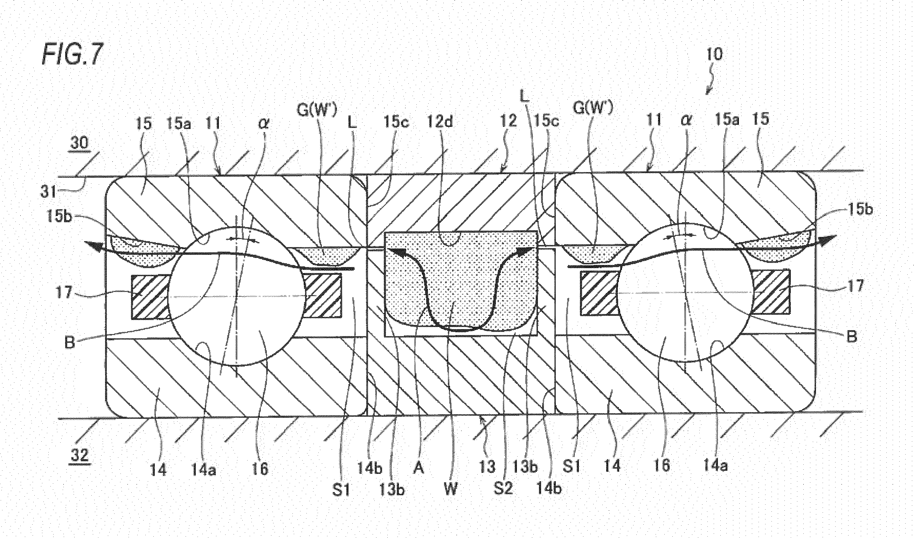

A bearing device 10 according to a third example will be described below with reference to Fig. 7.

An outer ring spacer 12 of this example is disposed in contact with an axial end face 15c on an anti-counter bore side of each outer ring 15. Further, an inner ring spacer 13 is disposed in contact with an axial end face 14b of each inner ring 14. A pair of inner ring spacer-side flange portions 13b extending outward in a radial direction are provided on an outer circumferential surface of both axial ends of the inner ring spacer provided on an outer circumferential surface of both axial ends of the inner ring spacer 13. Between a pair of labyrinths L formed between outer circumferential surfaces of the pair of inner ring spacer-side flange portions 13b and the inner circumferential surface of the outer ring spacer 12, the lubricant reservoir S2 is provided between an inner circumferential surface of the outer ring spacer 12 and the outer circumferential surface of 13. Between a pair of labyrinths L formed between outer circumferential surfaces of the pair of inner ring spacer-side flange portions 13b and the inner circumferential surface of the outer ring spacer 12, the lubricant reservoir S2 is provided between an inner circumferential surface of the outer ring spacer 12 and the outer circumferential surface of the inner ring spacer 13. Wax-containing lubricant W is enclosed in the lubricant reservoir S2, and communicates with a bearing space S1 of each angular ball bearing 11 through the labyrinth L.

In this example, the inner circumferential surface of the outer ring spacer 12 defining the labyrinth L has a substantially uniform diameter with the inner circumferential surface of the outer ring 15, and an axially inner side thereof is referred to as an annular inner circumferential groove 12d.

That is, when this example is compared to the first embodiment, the more amount of wax-containing lubricant W can be enclosed in the lubricant reservoir S2, and the inner ring spacer 13 can be incorporated with no division.

Even in this example, a low pressure region is formed by the labyrinth L provided in the vicinity of the ends of the outer and inner ring spacers 12 and 13 close to an end face of the bearing, and lubricating oil of wax-containing lubricant W liquefied in the lubricant reservoir S2 can move to the bearing by a capillary effect in the labyrinth L. Due to a pumping action of the angular ball bearing 11, air passes the bearing space S1 through the labyrinth L from the lubricant reservoir S2 and flows to the rolling surface of the outer ring 15, and the lubricating oil of wax-containing lubricant W is replenished to the bearing space S1 from the lubricant reservoir S2.

As described above, according to the bearing device 10 of this example, the pair of inner ring spacer-side flange portions 13b extending outward in the radial direction are provided on the outer circumferential surface of both axial ends of the inner ring spacer 13, and the lubricant reservoir S2 is provided between the pair of the labyrinths L formed between the outer circumferential surfaces of the pair of inner ring spacer-side flange portions 13b and the inner circumferential surface of the outer ring spacer 12. Thus, it is possible to increase the amount of wax-containing lubricant W enclosed in the lubricant reservoir S2 and to supply the wax-containing lubricant W enclosed in the lubricant reservoir S2 to the bearing space S1 while reducing manufacturing costs of the inner ring spacer 13.
Other configurations and operational effects are the same as those of the first embodiment.

Even in this example, similarly to the modified example of the first embodiment, a vent hole 35 is formed in the outer ring spacer 12 to allow the lubricant reservoir S2 to communicate with the outside, and the air sucked into the pair of angular ball bearings 11 from the clearance between the outer and inner ring spacers 12 and 13 caused by the rotation of the main shaft 32 may be replenished from the outside.

### (Second Embodiment)

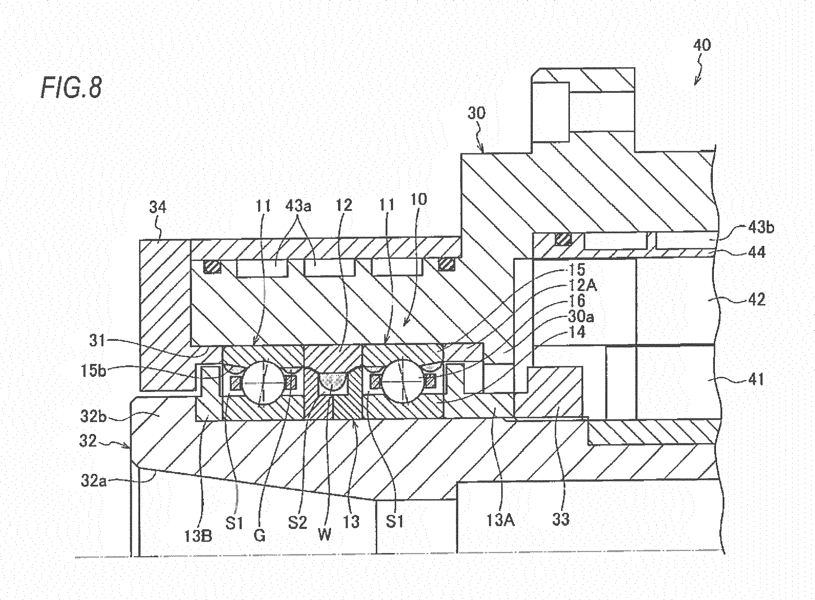

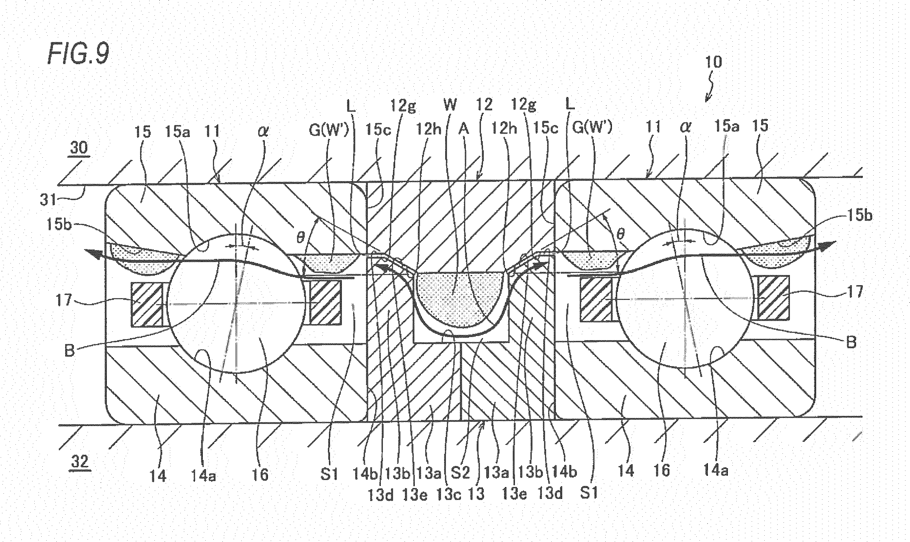

A bearing device according to a second embodiment of the present invention will be described below with reference to Figs. 8 and 9. In this embodiment, a configuration of an outer ring spacer 12 and an inner ring spacer 13 is different from that in the first example. In this embodiment, therefore, the configuration of the outer ring spacer 12 and the inner ring spacer 13 will be mainly described, and the same or equivalent parts as those in the first example are denoted by the same reference numerals and the description thereof will be omitted or simplified.

In this embodiment, as illustrated in Figs. 8 and 9, an outer ring spacer 12 is disposed in contact with an axial end face 15c on an anti-counter bore side of each outer ring 15.

From the viewpoint of assembly, the inner ring spacer 13 is divided into a pair of inner ring spacers 13a having the same configuration. Each of the inner ring spacers 13a faces the outer ring spacer 12, and is in contact with each other while being in contact with an axial end face 14b of each inner ring 14.

In addition, the inner ring spacers 13 respectively include inner ring spacer-side flange portions 13b extending outward in the radial direction on outer circumferential surfaces at a side of the bearings 11, and an annular recess portion 13c is formed by an axially inside surface of each flange portion 13b and the outer circumferential surface on an axially inner side of each inner ring spacer 13. A division position of the inner ring spacers 13 may be an axial position except the flange portion 13b.

Further, the inner circumferential surface of the outer ring spacer 12 and the outer circumferential surfaces of the inner ring spacer-side flange portions 13b of the pair of inner ring spacers 13a and 13a face each other, and thus form a pair of labyrinth L that communicate with bearing spaces S1. Specifically, the outer circumferential surfaces of the inner ring spacer-side flange portions 13b of the pair of inner ring spacers 13a and 13a include a cylindrical outer circumferential surface 13d having a uniform diameter at an axial end and an inner ring spacer-side tapered surface 13e that is continuous with the cylindrical outer circumferential surface 13d and is inclined at an inclination angle θ with respect to the axial direction so as to have a large diameter toward the angular ball bearing 11. Furthermore, the inner circumferential surface of the outer ring spacer 12 includes a cylindrical inner circumferential surface 12a that faces the cylindrical outer circumferential surface 13d and has a uniform diameter and an outer ring spacer-side tapered surface 12h that faces the inner ring spacer-side tapered surface 13e and is inclined at an inclination angle θ with respect to the axial direction so as to have a large diameter toward the angular ball bearing 11.

Therefore, a lubricant reservoir S2 defined between a pair of labyrinths L by the recess portion 13c of the inner ring spacer 13 is provided on the inner diameter side of the outer ring spacer 12 to communicate with a bearing space S1 through the pair of labyrinths L, and wax-containing lubricant W containing lubricating oil and wax is enclosed in the lubricant reservoir S2.

A cylindrical inner circumferential surface 12g of the outer ring spacer 12 is formed so as to be substantially equal to the inner diameter of the outer ring 15. In addition, it is more effective for the clearance of the labyrinth L to be narrower, but the clearance is preferably 0.15 to 1.0 mm at a radial distance perpendicular to the axial direction in consideration of interference between the outer and inner ring spacers 12 and 13 or part machining accuracy.

Herein, when the bearing device 10 is incorporated in a housing 30, an appropriate amount of grease G is enclosed in the bearing space S1 between the outer circumferential surface of the inner ring 14 and the inner circumferential surface of the outer ring 15 in the angular ball bearing 11. In this embodiment, however, an appropriate amount of wax-containing lubricant W is further enclosed in the lubricant reservoir S2.

The operation of the bearing device 10 according to this embodiment will be described below.

An appropriate amount of grease G is enclosed in the bearing space S1 of the bearing device 10, and an appropriate amount of wax-containing lubricant W is enclosed in the lubricant reservoir S2. As described above, the grease G contains the base oil having the same component as the wax-containing lubricant W and has affinity and infiltration with the wax-containing lubricant W. In addition, as illustrated in Fig. 8, the angular ball bearing 11 and its surroundings are controlled in temperature by the refrigerant supplied from a refrigerant supply device (not illustrated) and flowing in the refrigerant supply path 43a.

In the initial operation stage of the spindle device 40 in which the internal temperature of the angular ball bearing 11 is relatively low, the angular ball bearing 11 is lubricated by the grease G enclosed in the bearing space S1.

The base oil of the grease G is held by a thickener of fiber structure, and moves between the fibers of the thickener by capillary phenomenon. In a case where the spindle device 40 of the machine tool rotates at a high speed, the temperature of the peripheral portion of the bearing rises, and thus the neighboring grease G is liquefied accompanying the temperature rise. Therefore, the flow of the base oil becomes easy, and the service life of the grease is prolonged at high-speed rotation.

When the internal temperature of the angular ball bearing 11 gradually rises as the bearing device 10 operates, a temperature gradient is generated in which a temperature gradually rises from the outer ring spacer 12 and the inner ring spacer 13 toward the angular ball bearing 11. Then, when the temperature of the wax-containing lubricant located near the angular ball bearing 11 in the lubricant reservoir S2 reaches the liquefaction point, for example, 47°C, liquefaction of the wax-containing lubricant W is started, and the base oil is gradually supplied to the angular ball bearing 11.

Since the labyrinth L having the tapered surfaces 12h and 13e is provided between the outer circumferential surface of each inner ring spacer 13 and the inner circumferential surface of the outer ring spacer 12, air flows into the angular ball bearing 11 along the inner ring spacer-side tapered surface 13e from the fact that a centrifugal force generated on the tapered surfaces 12h and 13e gradually increases toward a larger diameter as the spindle device 40 rotates at a high speed. Further, in the tapered labyrinth L, since the outer circumferential surface of the rotating inner ring spacer 13 close to the end face of the bearing having a large diameter becomes faster in flow rate of air in a circumferential direction, the pressure thereof decreases, and, as a result, the air flows toward the end of the bearing from the anti-bearing side (see an arrow A). That is, the air flows in the circumferential direction and also flows in a spiral. Especially, when a dmn value of the bearing is 500,000 or more or 1,000,000 or more like the bearing for the machine tool main shaft, the pressure drop occurs due to the difference in the circumferential speed, which is great in effect.

Further, a phenomenon of sucking (so-called a pumping action) air into the counter bore 15b occurs (see an arrow B) in the angular ball bearing 11 having the counter bore 15b in the outer ring 15.

Therefore, by the flow of air flowing into the angular ball bearing 11 from the labyrinth L between the inner ring spacer 13 and the outer ring spacer 12 and the flow of air due to the pumping action of the angular ball bearing 11, the lubricating oil of the wax-containing lubricant W liquefied in the lubricant reservoir S2 moves to the bearing space S1 and is replenished to the grease G in the bearing space S1.

When the inclination angle 0 of the inner ring spacer-side tapered surface 13e and the outer ring spacer-side tapered surface 12h with respect to the axial direction is too small, the differential pressure effect becomes small, and thus the air flow is difficult to occur which causes the lubricating oil to flow toward the angular ball bearing 11. When the inclination angle θ is too large, the tapered surface 13e becomes a sharp edge, so that burrs or chips are liable to occur, the volume of the lubricant reservoir S2 becomes small, and a small amount of wax-containing lubricant W can be held. For this reason, the inclination angle θ may be preferably from 5° to 45°, and more preferably from 10° to 30°.

Furthermore, since the clearance of the labyrinth L is narrow, the lubricating oil of the wax-containing lubricant W in the lubricant reservoir S2 moves and is replenished to the bearing space S1 by a capillary phenomenon of the labyrinth L.

The grease G in the bearing space S1 is not liquefied, and thus can maintain the service life of the grease with ordinary grease lubrication. However, since the grease G has poor fluidity, the grease G contributing to the lubrication of the angular ball bearing 11 is limited to the base oil component in the grease G closest to the angular ball bearing 11. On the other hand, when the wax-containing lubricant W of this embodiment is used, the wax-containing lubricant W changes the semi-solid state to the liquid state due to the heat generation or the temperature rise of the angular ball bearing 11. For this reason, the lubricating oil of the wax-containing lubricant W in the lubricant reservoir S2 infiltrates and moves into the grease G in the angular ball bearing 11 from the lubricant reservoir S2 by the air flow in the bearing device 10 and the capillary phenomenon of the labyrinth L, and is gradually supplied into the angular ball bearing 11. As a result, it is possible to greatly prolong the lubrication life by oil replenishing action from the wax-containing lubricant W.

Since an inner diameter dimension of the outer ring 15 is substantially the same as that of the outer ring spacer 12 (cylindrical inner circumferential surface 12g), if the wax-containing lubricant W is also applied (enclosed) to a connecting portion between the inner diameter surface of the outer ring 15 and the inner diameter surface of the outer ring spacer 12 to communicate with each other, it is preferred because lubricating oil of the wax-containing lubricant W infiltrates and moves, and the lubricating oil of the wax-containing lubricant W in the lubricant reservoir S2 can also smoothly move to the angular ball bearing 11.

Further, as the angular ball bearing 11 rotates at a high speed, more lubricating oil is required in the rolling contact portion or the retainer guide surface. On the other hand, the temperature of the angular ball bearing 11 rises as the rotational speed increases, this heat is transmitted to the outer ring spacer 12, so that the liquefaction ratio of the wax-containing lubricant W in the lubricant reservoir S2 advances, and thus more lubricating oil is supplied to the angular ball bearing 11. This makes it possible to improve lubricating performance of the angular ball bearing 11 at high-speed rotation. That is, when the optimum liquefaction point is set, an appropriate amount of lubricating oil is automatically controlled and replenished corresponding to the rotational speed even when a command is not given from the outside.

Even in this embodiment, the grease G having affinity and infiltration with the wax-containing lubricant W is enclosed in the inside (bearing space) of the angular ball bearing 11, but another wax-containing lubricant W' instead of the grease G may be enclosed in the inside of the angular ball bearing 11.

As described above, according to the bearing device 10 of this embodiment, the lubricant reservoir S2 communicating with the bearing space S1 is defined between the inner circumferential surface of the outer ring spacer 12 and the outer circumferential surface of the inner ring spacer 13, and the wax-containing lubricant W is enclosed in the lubricant reservoir S2, the wax-containing lubricant containing the lubricating oil and the wax and being changeable between the liquid state at a temperature exceeding the liquefaction point which is a predetermined temperature within a temperature range of 10°C to 70°C and the semi-solid state at a temperature equal to or lower than the liquefaction point. Thus, the lubricating oil of the wax-containing lubricant W liquefied in the lubricant reservoir S2 moves to the bearing space S1 at the time of a running-in operation or by the air flow, so that it is possible to lubricate the angular ball bearing 11 with the optimum amount of lubricating oil and to greatly prolong the lubrication life of the angular ball bearing 11.

In addition, since the inner circumferential surface of the outer ring spacer 12 and the outer circumferential surface of the inner ring spacer 13 have the tapered surfaces 12h and 13e, which face each other and become larger in diameter toward the angular ball bearing 11, to form the labyrinth L communicating with the bearing space S1 from the lubricant reservoir S2, the lubricating oil of the wax-containing lubricant W in the lubricant reservoir S2 moves to the bearing space S1 by the flow of air flowing into the angular ball bearing 11 from the labyrinth L between the inner ring spacer 13 and the outer ring spacer 12, the flow of air due to the pumping action of the angular ball bearing 11, and the capillary phenomenon of the large diameter labyrinth L1, and thus the lubrication life can be prolonged.

Since the labyrinth L on the bearing side is tapered to have the large diameter, the pressure difference occurs in the labyrinth L, and the air flow more easily occurs from the anti-bearing side to the bearing side. Further, a vent hole (not illustrated) allowing the lubricant reservoir S2 to communicate with the outside can also be formed in order for the air to easily flow.

Other configurations and operational effects are the same as those of the first example.

### (Fourth Example)

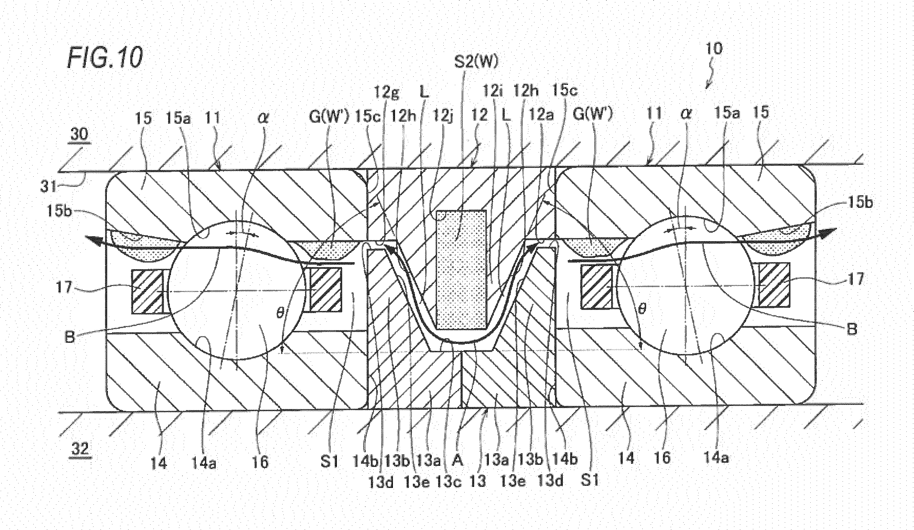

A bearing device 10 according to a fourth example will be described below with reference to Fig. 10.
In this example, a pair of inner ring spacers 13a and 13a respectively include inner ring spacer-side flange portions 13b extending outward in the radial direction and has inner ring spacer-tapered surfaces 13e as axially inside surfaces. Correspondingly, an outer ring spacer 12 includes an outer ring spacer-side flange portion 12i extending inward in a radial direction and has an outer ring spacer-side tapered surface 12h as an axially inside surface, thereby constituting a pair of labyrinths L. Accordingly, the tapered labyrinth L in this example is formed longer than that in the second embodiment.

These tapered surfaces 12h and 13e have an inclination angle θ of 30° or more and preferably 45° or more with respect to the axial direction. In this example, an axial clearance of the labyrinth L may be formed to be larger than 0.15 to 1.0 mm at the radial distance in the second embodiment.

In order to increase the volume of a lubricant reservoir S2 in this example, an annular recess portion 12j constituting a lubricant reservoir S2 is formed on the inner circumferential surface of the outer ring spacer 12. Thereby, the effect of prolonging a lubrication life can be exhibited.

Accordingly, even in this example, air flows toward a bearing side from an anti-bearing side due to the labyrinth L constituted by the tapered surfaces 12h and 13e, and lubricating oil of wax-containing lubricant W liquefied in the lubricant reservoir S2 moves to a bearing space S1, so that it is possible to lubricate the angular ball bearing 11 with the optimum amount of lubricating oil and to prolong the lubrication life of the bearing.

Other configurations and operational effects are the same as those of the second embodiment.

Even in this example, a vent hole (not illustrated) allowing the lubricant reservoir S2 to communicate with the outside can also be formed in order for the air to easily flow.

### (Fifth Example)

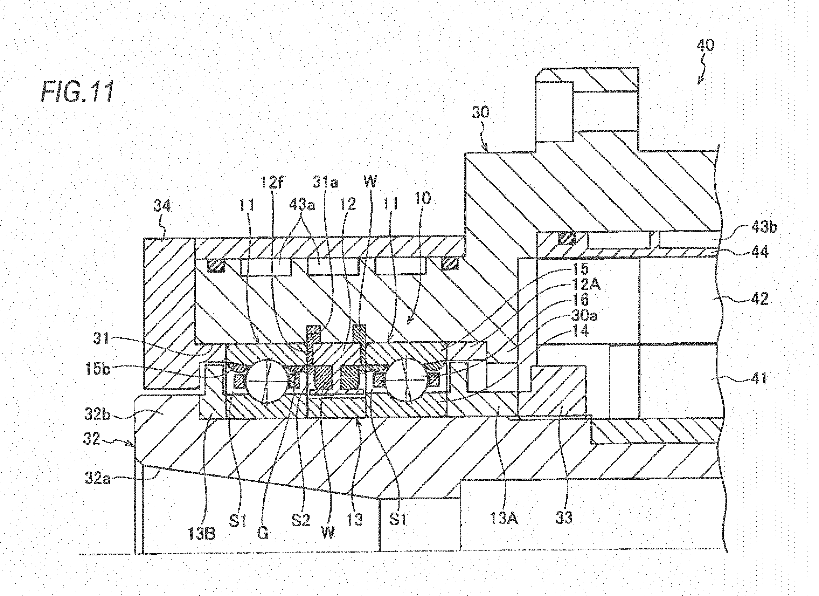

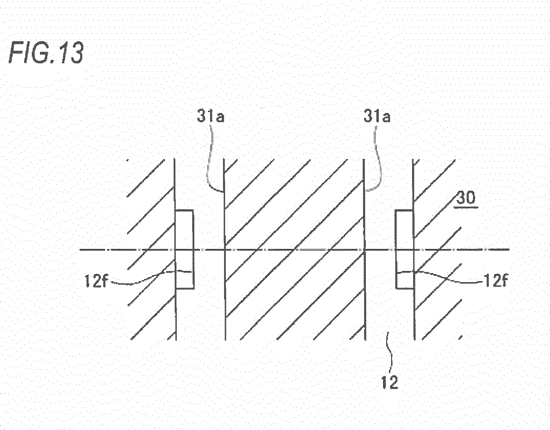

First, a spindle device according to a fifth example will be described below with reference to Figs. 11 to 13. In this example, a configuration of an outer ring spacer 12 and an inner ring spacer 13 different from that in the first example. In this example, therefore, the configuration of the outer ring spacer 12 and the inner ring spacer 13 will be mainly described, and the same or equivalent parts as those in the first example are denoted by the same reference numerals and the description thereof will be omitted or simplified.

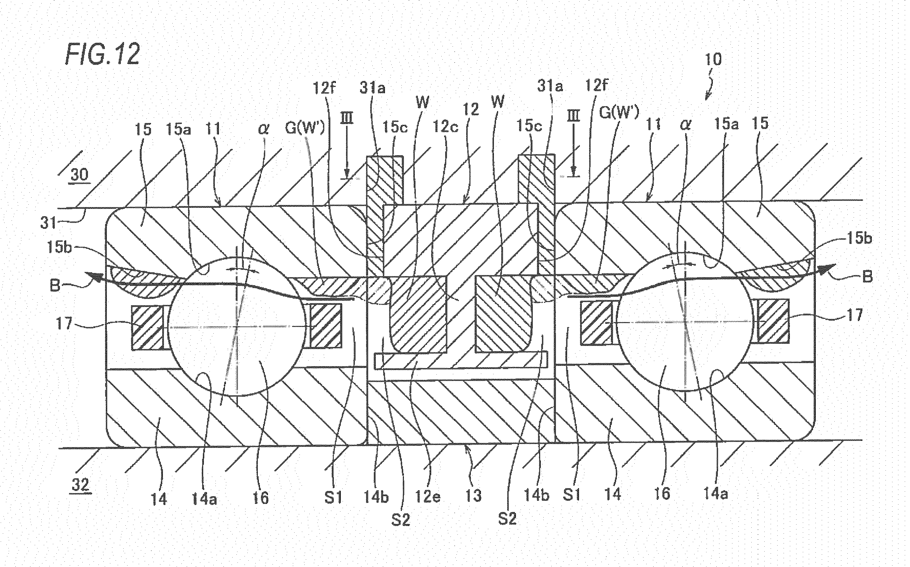

In this example, as illustrated in Figs. 11 and 12, on an inner circumferential surface of a mounting hole 31 of a housing 30 in which an outer ring 15 and an outer ring spacer 12 are internally fitted and fixed, and a circumferential groove 31a is formed along a circumferential direction at positions where the outer ring 15 and the outer ring spacer 12 are in contact in the axial direction.

The outer ring spacer 12 is disposed in contact with an axial end face 15c on an anti-counter bore side of each outer ring 15. The outer ring spacer 12 includes an outer ring spacer-side flange portion 12c that extends inward in a radial direction at an axially intermediate portion of the inner circumferential surface thereof and a cylindrical portion 12e that extends toward both axial ends from an inner circumferential portion of the outer ring spacer-side flange portion 12c. In the outer ring spacer 12, radial cutouts 12f are provided at a plurality of circumferential positions on both axial end faces being in contact with the outer rings 15. The cutout 12f allows a circumferential groove 31a of the housing 30 to communicate with a bearing space S1.

Then, a pair of lubricant reservoirs S2 are respectively defined by the inner circumferential surface of the outer ring spacer 12, the axial end face of the outer ring spacer-side flange portion 12c, and the outer circumferential surface of the cylindrical portion 12e. Each of the pair of lubricant reservoirs S2 communicates with a bearing space S1 of each angular ball bearing 11, and encloses wax-containing lubricant W with the circumferential groove 31a of the housing 30 and the cutout 12f of the outer ring spacer 12 which communicate with each other. In addition, an inner diameter of the inner circumferential surface of the outer ring spacer 12 is formed to be substantially equal to an inner diameter of the outer ring 15.

The inner ring spacer 13 has an outer circumferential surface formed by a cylindrical surface, faces the outer ring spacer 12, and is in contact with an axial end face 14b of each inner ring 14.

Herein, when the bearing device 10 is incorporated in a housing 30, an appropriate amount of grease G is enclosed in the bearing space S1 between the outer circumferential surface of the inner ring 14 and the inner circumferential surface of the outer ring 15 in the angular ball bearing 11. In this example, however, an appropriate amount of wax-containing lubricant W is further enclosed in the lubricant reservoir S2, the circumferential groove 31a of the housing 30, and the cutout 12f of the outer ring spacer 12.

The operation of the bearing device 10 according to this example will be described below.

An appropriate amount of grease G is enclosed in the bearing space S1 of the bearing device 10, and an appropriate amount of wax-containing lubricant W is enclosed in the lubricant reservoir S2, the circumferential groove 31a of the housing 30, and the cutout 12f of the outer ring spacer 12. As described above, the grease G contains the base oil having the same component as the wax-containing lubricant W and has affinity and infiltration with the wax-containing lubricant W. In addition, as illustrated in Fig. 11, the angular ball bearing 11 and its surroundings are controlled in temperature by the refrigerant supplied from a refrigerant supply device (not illustrated) and flowing in the refrigerant supply path 43a.

In the initial operation stage of the spindle device 40 in which the internal temperature of the angular ball bearing 11 is relatively low, the angular ball bearing 11 is lubricated by the grease G enclosed in the bearing space S1.

The base oil of the grease G is held by a thickener of fiber structure, and moves between the fibers of the thickener by capillary phenomenon. In a case where the spindle device 40 of the machine tool rotates at a high speed, the temperature of the peripheral portion of the bearing rises, and thus the neighboring grease G is liquefied accompanying the temperature rise. Therefore, the flow of the base oil becomes easy, and the service life of the grease is prolonged at high-speed rotation.

When the internal temperature of the angular ball bearing 11 gradually rises as the bearing device 10 operates, a temperature gradient is generated in which a temperature gradually rises from the outer ring spacer 12 and the inner ring spacer 13 toward the angular ball bearing 11. Then, when the temperature of the wax-containing lubricant located near the angular ball bearing 11 in the lubricant reservoir S2, the circumferential groove 31a of the housing 30, and the cutout 12f of the outer ring spacer 12 reaches the liquefaction point, for example, 47°C, liquefaction of the wax-containing lubricant W is started, and the base oil is gradually supplied to the angular ball bearing 11.

Further, a phenomenon of sucking (so-called a pumping action) air into the counter bore 15b occurs (see an arrow B) in the angular ball bearing 11 having the counter bore 15b in the outer ring 15. Therefore, by the flow of air due to the pumping action of the angular ball bearing 11, the lubricating oil of the wax-containing lubricant W liquefied in the lubricant reservoir S2, the cutout 12f, and the circumferential groove 31a moves to the bearing space S1 and is replenished to the grease G in the bearing space S1. Since the wax-containing lubricant W is enclosed in three places of the lubricant reservoir S2, the cutout 12f, and the circumferential groove 31a, it is possible to increase the storage amount of wax-containing lubricant W. Thus, the amount of lubricating oil used for lubrication of the angular ball bearing 11 can be greatly increased.

The grease G in the bearing space S1 is not liquefied, and thus can maintain the service life of the grease with ordinary grease lubrication. However, since the grease G has poor fluidity, the grease G contributing to the lubrication of the angular ball bearing 11 is limited to the base oil component in the grease G closest to the angular ball bearing 11. On the other hand, when the wax-containing lubricant W of this example is used, the wax-containing lubricant W changes the semi-solid state to the liquid state due to the heat generation or the temperature rise of the angular ball bearing 11. For this reason, the lubricating oil of the wax-containing lubricant W in the lubricant reservoir S2, the cutout 12f, and the circumferential groove 31a infiltrates and moves into the grease G in the angular ball bearing 11 from the lubricant reservoir S2, the cutout 12f, and the circumferential groove 31a by the air flow in the bearing device 10, and is gradually supplied into the angular ball bearing 11. As a result, it is possible to greatly prolong the lubrication life by oil replenishing action from the wax-containing lubricant W.

The lubricant reservoir S2 of this example is formed by a groove having an U-shaped section of the outer ring spacer 12 facing each of the angular ball bearings 11 and 11, and thus can appropriately hold the wax-containing lubricant W. Further, since an inner diameter dimension of the outer ring 15 is substantially the same as that of the outer ring spacer 12, if the wax-containing lubricant W is also applied (enclosed) to a connecting portion between the inner diameter surface of the outer ring 15 and the inner diameter surface of the outer ring spacer 12 to communicate with each other, it is preferred because lubricating oil of the wax-containing lubricant W infiltrates and moves, and the lubricating oil of the wax-containing lubricant W in the lubricant reservoir S2 can also smoothly move to the angular ball bearing 11.

Further, as the angular ball bearing 11 rotates at a high speed, more lubricating oil is required in the rolling contact portion or the retainer guide surface. On the other hand, the temperature of the angular ball bearing 11 rises as the rotational speed increases, this heat is transmitted to the outer ring spacer 12, so that the liquefaction ratio of the wax-containing lubricant W in the lubricant reservoir S2, the cutout 12f, and the circumferential groove 31a advances, and thus more lubricating oil is supplied to the angular ball bearing 11. This makes it possible to improve lubricating performance of the angular ball bearing 11 at high-speed rotation. That is, when the optimum liquefaction point is set, an appropriate amount of lubricating oil is automatically controlled and replenished corresponding to the rotational speed even when a command is not given from the outside.

Even in this example, the grease G having affinity and infiltration with the wax-containing lubricant W is enclosed in the inside (bearing space) of the angular ball bearing 11, but another wax-containing lubricant W' instead of the grease G may be enclosed in the inside of the angular ball bearing 11.

As described above, according to the bearing device 10 of this example, the lubricant reservoir S2 is defined on the inner circumferential surface of the outer ring spacer 12, and the circumferential groove 31a formed along the circumferential direction is provided in the inner circumferential surface of the housing 30 in which the outer ring 15 is internally fitted and fixed. The circumferential groove 31a communicates with the lubricant reservoir S2 and the bearing space S1 by the cutout 12f formed along the radial direction on the axial end face of the outer ring spacer 12. The wax-containing lubricant W is enclosed in the circumferential groove 31a, the cutout 12f, and the lubricant reservoir S2, the wax-containing lubricant containing the lubricating oil and the wax and being changeable between the liquid state at a temperature exceeding the liquefaction point which is a predetermined temperature within a temperature range of 10°C to 70°C and the semi-solid state at a temperature equal to or lower than the liquefaction point. Thus, the amount of in the wax-containing lubricant W to be enclosed by the circumferential groove 31a can be greatly increased, and the lubricating oil of the wax-containing lubricant W in the cutout 12f and the circumferential groove 31a as well as the wax-containing lubricant W in the lubricant reservoir S2 moves to the bearing space S1 at the time of a running-in operation or by the air flow, so that it is possible to lubricate the angular ball bearing 11 with the optimum amount of lubricating oil and to greatly prolong the lubrication life of the angular ball bearing 11.

The circumferential groove 31a of the housing 30, the cutout 12f of the outer ring spacer 12, and the lubricant reservoir S2 may have any shape without being particularly limited as long as it can hold the wax-containing lubricant W. The circumferential groove 31a may be formed on the entire circumference of the inner circumferential surface of the mounting hole 31 of the housing 30, and may be partially formed at a plurality of circumferential places on the communicating position with the cutout 12f.

Further, the wax-containing lubricant W may be enclosed in only the circumferential groove 31a of the housing 30 and the lubricant reservoir S2.

Other configurations and operational effects are the same as those of the first example.

### (Sixth Example)

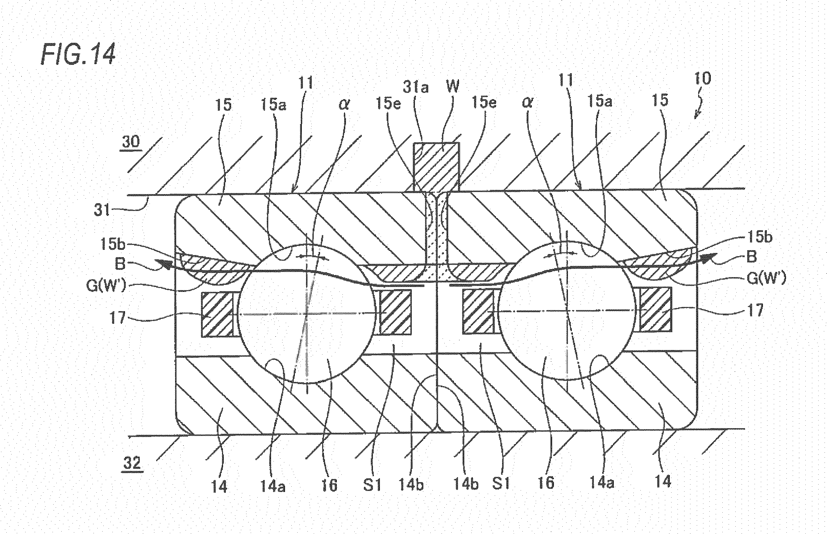

A spindle device according to a sixth example will be described with reference to Fig. 14. The same or equivalent parts as those in the fifth example are denoted by the same reference numerals in the drawing and the description thereof will be omitted or simplified.

A spindle device 40 of the sixth example does not include an outer ring spacer 12 and an inner ring spacer 13 and has a pair of angular ball bearings 11 (inner and outer rings 14 and 15) that are internally fitted in a mounting hole 31 of a housing 30 and are in contact with each other in an axial direction. A radial cutout 15e is formed in an axial end face 15c (see Fig. 12) of the outer ring 15. The cutout 15e allows a circumferential groove 31a formed in the mounting hole 31 of the housing 30 to communicate with a bearing space S1. An appropriate amount of grease G is enclosed in the bearing space S1, and an appropriate amount of wax-containing lubricant W is enclosed in the circumferential groove 31a of the housing 30.

As described above, according to the spindle device 40 of this example, the spindle device 40 can be formed to be short by an axial length of the outer ring spacer 12 and the inner ring spacer 13, and the spindle device 40 can be made compact. Further, the wax-containing lubricant W can be enclosed in the circumferential groove 31a of the housing 30, the wax-containing lubricant W can be supplied to the angular ball bearing 11 through the cutout 15e, and the service life of the lubricant can be prolonged.

Other configurations and operational effects are the same as those of the fifth example.

It should be noted that the present invention is not limited to the above-described embodiments, and modifications and improvements may be made within the scope of the claims.

For example, the above embodiments are described with respect to the outer ring spacer and the inner ring spacer in which the pair of angular ball bearings are disposed on both sides, but the present invention is applicable to an outer ring spacer and an inner ring spacer in which an angular ball bearing is disposed on one axial side.

As long as the attachment member of the present invention is disposed adjacently to the rolling bearing, it may be applied without being limited to the outer ring spacer or the outer ring presser of the embodiments.

Further, the present invention is also applicable to rolling elements other than balls without being limited to the angular ball bearing 11.

For example, since the phenomenon of sucking (so-called a pumping action) air also occurs in a conical rolling bearing having an inclined surface, in which the raceway surface is inclined in the axial direction, as in the angular ball bearing 11, the present invention can be suitably configured in the conical rolling bearing.
Further, the present invention is also applicable to a cylindrical roller bearing having a roller as a rolling element. In this case, the air sucking phenomenon does not occur, but if the outer ring inner has the same inner diameter dimension as the outer ring spacer, the lubricant easily moves as described above by allowing both lubricants to communicate with each other.

Further, although the example is described in which the bearing device 10 is incorporated into the spindle device 40 for the machine tool, the present invention can also be applied to a general industrial machine or a high-speed rotating device such as a motor without being limited to the rolling bearing for and a rolling bearing for an device, which rotates at high speed, such as a rolling bearing for other motors without being limited to spindle device 40 for the machine tool, thereby achieving the same effect.

### DESCRIPTION OF REFERENCE NUMERALS

- 10:: Bearing device
- 11:: Angular ball bearing (rolling bearing)
- 12:: Outer ring spacer (attachment member)
- 12c:: Outer ring spacer-side flange portion
- 12e:: Cylindrical portion
- 12f:: Cutout
- 12h:: Outer ring spacer-side tapered surface (tapered surface)
- 12j:: Recess portion
- 13:: Inner ring spacer
- 13b:: Inner ring spacer-side flange portion
- 13e:: Inner ring spacer-side tapered surface (tapered surface)
- 14:: Inner ring
- 14a:: Inner ring raceway surface
- 15:: Outer ring
- 15a:: Outer ring raceway surface
- 15b:: Counter bore
- 15c:: Axial end face
- 15d:: Axial end face
- 15e:: Cutout
- 16:: Ball (rolling element)
- 30:: Housing
- 31:: Mounting hole
- 31a:: Circumferential groove
- 32:: Rotary shaft (main shaft)
- 34:: Outer ring presser (attachment member)
- 34a:: Annular groove (recess groove)
- 35:: Vent hole
- G:: Grease
- L:: Labyrinth
- L1:: Large diameter labyrinth
- L2:: Small diameter labyrinth
- S1:: Bearing space
- S2:: Lubricant reservoir
- S3:: Second lubricant reservoir
- W:: Wax-containing lubricant
- W':: Another wax-containing lubricant

## Claims

1. A bearing device (10) comprising:
a rolling bearing (11) including an inner ring (14) having an inner ring raceway surface (14a) on an outer circumferential surface thereof, an outer ring (15) having an outer ring raceway surface (15a) on an inner circumferential surface thereof, and a plurality of rolling elements (16) that are rollably disposed between the inner ring raceway surface (14a) and the outer ring raceway surface (15a), wherein lubricant is enclosed in a bearing space (S1) between the outer circumferential surface of the inner ring (14) and the inner circumferential surface of the outer ring (15); and
an attachment member (12, 13) that is disposed adjacently to the rolling bearing (11),
wherein the attachment member (12, 13) has a lubricant reservoir (S2) communicating with the bearing space (S1), **characterized in**
**that** the lubricant reservoir (S2) encloses therein wax-containing lubricant (W) that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point,
**that** the attachment member (12, 13) includes:
an outer ring spacer (12) that is disposed in contact with an axial end face of the outer ring (15); and
an inner ring spacer (13) that faces the outer ring spacer (12) and is disposed in contact with an axial end face of the inner ring (14),
**that** the inner ring spacer (13) is provided with an inner ring spacer-side flange portion (13b) extending outward in a radial direction on a bearing-side outer circumferential surface of the inner ring spacer (13),
**that** the lubricant reservoir (S2) is defined by an inner circumferential surface of the outer ring spacer (12), an axial end face of the inner ring spacer-side flange portion (13b), and the outer circumferential surface of the inner ring spacer (13), and
**that** a large diameter labyrinth (L1) is formed between an outer circumferential surface of the inner ring spacer-side flange portion (13b) and an inner circumferential surface of the outer ring spacer (12) and allows the lubricant reservoir (S2) to communicate with the bearing space (S1).

2. The bearing device (10) according to claim 1, **characterized in**
**that** the inner circumferential surface of the outer ring spacer (12) is provided with an outer ring spacer-side flange portion (12c) extending inward in a radial direction on an opposite side of the rolling bearing (11) with respect to the inner ring spacer-side flange portion (13b), and
**that** the lubricant reservoir (S2) is provided between the large diameter labyrinth (L1) formed between the outer circumferential surface of the inner ring spacer-side flange portion (13b) and the inner circumferential surface of the outer ring spacer (12) and a small diameter labyrinth (L2) formed between an inner circumferential surface of the outer ring spacer-side flange portion (12c) and the outer circumferential surface of the inner ring spacer (13).

3. The bearing device (10) according to claim 1 or 2, **characterized in**
**that** the outer ring spacer (12) is formed with a vent hole (35) through which air is replenished, the vent hole (35) allowing the lubricant reservoir (S2) to communicate with the outside.

4. A bearing device (10) comprising:
a rolling bearing (11) including an inner ring (14) having an inner ring raceway surface (14a) on an outer circumferential surface thereof, an outer ring (15) having an outer ring raceway surface (15a) on an inner circumferential surface thereof, and a plurality of rolling elements (16) that are rollably disposed between the inner ring raceway surface (14a) and the outer ring raceway surface (15a), wherein lubricant is enclosed in a bearing space (S1) between the outer circumferential surface of the inner ring (14) and the inner circumferential surface of the outer ring (15); and
an attachment member (12, 13) that is disposed adjacently to the rolling bearing (11),
wherein the attachment member (12, 13) has a lubricant reservoir (S2) communicating with the bearing space (S1), **characterized in**
**that** the lubricant reservoir (S2) encloses therein wax-containing lubricant (W) that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point,
**that** the attachment member (12, 13) includes:
an outer ring spacer (12) that is disposed in contact with an axial end face of the outer ring (15); and
an inner ring spacer (13) that faces the outer ring spacer (12) and is disposed in contact with an axial end face of the inner ring (14),
**that** the lubricant reservoir (S2) is defined between an inner circumferential surface of the outer ring spacer (12) and an outer circumferential surface of the inner ring spacer (13), and
**that** the inner circumferential surface of the outer ring spacer (12) and the outer circumferential surface of the inner ring spacer (13) have tapered surfaces (12h, 13e) that face each other and have a larger diameter toward the rolling bearing (11) so as to form a labyrinth (L) communicating from the lubricant reservoir (S2) to the bearing space (S1).

5. The bearing device (10) according to claim 4, **characterized in**
**that** the rolling bearing (11) includes a pair of rolling bearings (11),
**that** the inner ring spacer (13) includes a pair of inner ring spacers (13) that are disposed in contact with axial end faces of the inner rings (14), respectively,
**that** the lubricant reservoir (S2) is defined between the inner circumferential surface of the outer ring spacer (12) and the outer circumferential surfaces of the pair of inner ring spacers (13), and
**that** the inner circumferential surface of the outer ring spacer (12) and the outer circumferential surfaces of the pair of inner ring spacers (13) have tapered surfaces that face each other and have a larger diameter toward the rolling bearings (11) so as to form a pair of labyrinths communicating from the lubricant reservoir (S2) to the bearing spaces (S1).

6. The bearing device (10) according to claim 5, **characterized in**
**that** the pair of inner ring spacers (13) include inner ring spacer-side flange portions (13b), each having an axially inside surface as the tapered surface (13e) and extending outward in a radial direction, and
**that** an annular recess portion is formed on the inner circumferential surface of the outer ring spacer (12) and defines the lubricant reservoir (S2).

## Patentansprüche

1. Lagerungsvorrichtung (10), die umfasst:
ein Wälzlager (11), das einen Innenring (14) mit einer Innenring-Laufbahnfläche (14a) an seiner Außenumfangsfläche, einen Außenring (15) mit einer Außenring-Laufbahnfläche (15a) an seiner Innenumfangsfläche sowie eine Vielzahl von Wälzkörpern (16) enthält, die zwischen der Innenring-Laufbahnfläche (14a) und der Außenring-Laufbahnfläche (15a) so angeordnet sind, dass sie rollen können, wobei Schmiermittel in einem Lagerungs-Raum (S1) zwischen der Außenumfangsfläche des Innenrings (14) und der Innenumfangsfläche des Außenrings (15) eingeschlossen ist; sowie
ein Anbringungselement (12, 13), das an das Wälzlager (11) angrenzend angeordnet ist,
wobei das Anbringungselement (12, 13) einen Schmiermittel-Vorratsraum (S2) aufweist, der mit dem Lagerungs-Raum (S1) in Verbindung steht, **dadurch gekennzeichnet, dass**
in dem Schmiermittel-Vorratsraum (S2) wachshaltiges Schmiermittel (W) eingeschlossen ist, das Schmieröl und Wachs enthält, und das, auf Basis eines Verflüssigungspunktes, der eine vorgegebene Temperatur innerhalb eines Temperaturbereiches von 10°C bis 70°C ist, zwischen einem flüssigen Zustand bei einer Temperatur oberhalb des Verflüssigungspunktes und einem halbfesten Zustand bei einer Temperatur auf oder unter dem Verflüssigungspunkt wechseln kann,
das Anbringungselement (12, 13) enthält:
einen Außenring-Abstandshalter (12), der in Kontakt mit einer axialen Endfläche des Außenrings (15) angeordnet ist; sowie
einen Innenring-Abstandshalter (13), der dem Außenring-Abstandshalter (12) zugewandt und in Kontakt mit einer axialen Endfläche des Innenrings (14) angeordnet ist,
der Innenring-Abstandshalter (13) mit einem Flanschabschnitt (13b) der Seite des Innenring-Abstandshalters versehen ist, der sich in einer radialen Richtung an einer lagerseitigen Außenumfangsfläche des Innenring-Abstandshalters (13) nach außen erstreckt,
der Schmiermittel-Vorratsraum (S2) durch eine Innenumfangsfläche des Außenring-Abstandshalters (12), eine axiale Endfläche des Flanschabschnitts (13b) der Seite des Innenring-Abstandshalters sowie die Außenumfangsfläche des Innenring-Abstandshalters (13) gebildet wird, und
ein Labyrinth (L1) mit großem Durchmesser zwischen einer Außenumfangsfläche des Flanschabschnitts (13b) der Seite des Innenring-Abstandshalters und einer Innenumfangsfläche des Außenring-Abstandshalters (12) gebildet wird und Verbindung des Schmiermittel-Vorratsraums (S2) mit dem Lagerungs-Raum (S1) zulässt.

2. Lagervorrichtung (10) nach Anspruch 1, **dadurch gekennzeichnet, dass**
die Innenumfangsfläche des Außenring-Abstandshalters (12) mit einem Flanschabschnitt (12c) der Seite des Außenring-Abstandshalters versehen ist, der sich an einer in Bezug auf den Flanschabschnitt (13b) der Seite des Innenring-Abstandshalters gegenüberliegenden Seite des Wälzlagers (11) in einer radialen Richtung nach innen erstreckt, und
der Schmiermittel-Vorratsraum (S2) zwischen dem Labyrinth (L1) mit großem Durchmesser, das zwischen der Außenumfangsfläche des Flanschabschnitts (13b) der Seite des Innenring-Abstandshalters und der Innenumfangsfläche des Außenring-Abstandshalters (12) ausgebildet ist, und einem Labyrinth (L2) mit kleinem Durchmesser vorhanden ist, das zwischen einer Innenumfangsfläche des Flanschabschnitts (12c) der Seite des Außenring-Abstandshalters und der Außenumfangsfläche des Innenring-Abstandshalters (13) ausgebildet ist.

3. Lagerungsvorrichtung (10) nach Anspruch 1 oder 2, **dadurch gekennzeichnet, dass**
der Außenring-Abstandshalter (12) mit einer Lüftungsöffnung (35) versehen ist, über die Luft nachgefüllt wird, wobei die Lüftungsöffnung (35) Verbindung des Schmiermittel-Vorratsraums (S2) mit der Außenseite zulässt.

4. Lagerungsvorrichtung (10), die umfasst:
ein Wälzlager (11), das einen Innenring (14) mit einer Innenring-Laufbahnfläche (14a) an seiner Außenumfangsfläche, einen Außenring (15) mit einer Außenring-Laufbahnfläche (15a) an seiner Innenumfangsfläche sowie eine Vielzahl von Wälzkörpern (16) enthält, die zwischen der Innenring-Laufbahnfläche (14a) und der Außenring-Laufbahnfläche (15a) so angeordnet sind, dass sie rollen können, wobei Schmiermittel in einem Lagerungs-Raum (S1) zwischen der Außenumfangsfläche des Innenrings (14) und der Innenumfangsfläche des Außenrings (15) eingeschlossen ist; sowie
ein Anbringungselement (12, 13), das an das Wälzlager (11) angrenzend angeordnet ist,
wobei das Anbringungselement (12, 13) einen Schmiermittel-Vorratsraum (S2) aufweist, der mit dem Lagerungs-Raum (S1) in Verbindung steht, **dadurch gekennzeichnet, dass**
in dem Schmiermittel-Vorratsraum (S2) wachshaltiges Schmiermittel (W) eingeschlossen ist, das Schmieröl und Wachs enthält, und das, auf Basis eines Verflüssigungspunktes, der eine vorgegebene Temperatur in einem Temperaturbereich von 10°C bis 70°C ist, zwischen einem flüssigen Zustand bei einer Temperatur oberhalb des Verflüssigungspunktes und einem halbfesten Zustand bei einer Temperatur auf oder unter dem Verflüssigungspunkt wechseln kann,
das Anbringungselement (12, 13) enthält:
einen Außenring-Abstandshalter (12), der in Kontakt mit einer axialen Endfläche des Außenrings (15) angeordnet ist; sowie
einen Innenring-Abstandshalter (13), der dem Außenring-Abstandshalter (12) zugewandt und in Kontakt mit einer axialen Endfläche des Innenrings (14) angeordnet ist,
der Schmiermittel-Vorratsraum (S2) zwischen einer Innenumfangsfläche des Außenring-Abstandshalters (12) und einer Außenumfangsfläche des Innenring-Abstandshalters (13) ausgebildet ist, und
die Innenumfangsfläche des Außenring-Abstandshalters (12) und die Außenumfangsfläche des Innenring-Abstandshalters (13) konische Flächen (12h, 13e) aufweisen, die einander zugewandt sind und zu dem Wälzlager (11) hin einen größeren Durchmesser haben, so dass ein Labyrinth (L) gebildet wird, das Verbindung von dem Schmiermittel-Vorratsraum (S2) zu dem Lagerungs-Raum (S1) herstellt.

5. Lagerungsvorrichtung (10) nach Anspruch 4, **dadurch gekennzeichnet, dass**
das Wälzlager (11) ein Paar Wälzlager (11) enthält,
der Innenring-Abstandshalter (13) ein Paar von Innenring-Abstandshaltern (13) einschließt, die jeweils in Kontakt mit axialen Endflächen der Innenringe (14) angeordnet sind,
dass der Schmiermittel-Vorratsraum (S2) zwischen der Innenumfangsfläche des Außenring-Abstandshalters (12) und den Außenumfangsflächen der paarigen Innenring-Abstandshalter (13) ausgebildet ist, und
die Innenumfangsfläche des Außenring-Abstandshalters (12) und die Außenumfangsflächen der paarigen Innenring-Abstandshalter (13) konische Flächen haben, die einander zugewandt sind und zu den Wälzlagern (11) hin einen größeren Durchmesser haben, so dass ein Paar von Labyrinthen gebildet wird, die Verbindung von dem Schmiermittel-Vorratsraum (S2) zu den Lagerungs-Räumen (S1) herstellen.

6. Lagerungsvorrichtung (10) nach Anspruch 5, **dadurch gekennzeichnet, dass**
die paarigen Innenring-Abstandshalter (13) Flanschabschnitte (13b) der Seite der Innenring-Abstandshalter enthalten, die jeweils eine axial innenliegende Fläche als die konische Fläche (13e) aufweisen und sich in einer radialen Richtung nach außen erstrecken, und
an der Innenumfangsfläche des Außenring-Abstandshalters (12) ein ringförmiger Aussparungsabschnitt ausgebildet ist, der den Schmiermittel-Vorratsraum (S2) bildet.

## Revendications

1. Dispositif de palier (10) comprenant :
un roulement (11) qui comporte un anneau interne (14) présentant une surface de chemin de roulement d'anneau interne (14a) sur sa surface circonférentielle externe, un anneau externe (15) qui comporte une surface de chemin de roulement d'anneau externe (15a) sur sa surface circonférentielle interne, et une pluralité d'éléments de roulement (16) qui sont disposés de manière roulante entre la surface de chemin de roulement d'anneau interne (14a) et la surface de chemin de roulement d'anneau externe (15a), dans lequel du lubrifiant est enfermé dans un espace de roulement (S1) entre la surface circonférentielle externe de l'anneau interne (14) et la surface circonférentielle interne de l'anneau externe (15) ; et
un élément de fixation (12, 13) qui est disposé de manière adjacente au roulement (11),
dans lequel l'élément de fixation (12, 13) comporte un réservoir de lubrifiant (S2) qui communique avec l'espace de roulement (S1),
**caractérisé**
**en ce que** le réservoir de lubrifiant (S2) comprend un lubrifiant contenant de la cire (W) qui contient de l'huile de lubrification et de la cire et, sur base du point de liquéfaction, c'est-à-dire une température prédéterminée comprise dans une plage de température de 10 °C à 70 °C, qui peut être commuté entre un état liquide à une température dépassant le point de liquéfaction et un état semi-solide à une température inférieure ou égale au point de liquéfaction,
**en ce que** l'élément de fixation (12, 13) comprend :
une entretoise d'anneau externe (12) qui est disposée en contact avec une face d'extrémité axiale de l'anneau externe (15) ; et
une entretoise d'anneau interne (13) qui fait face à l'entretoise d'anneau externe (12) et est disposée en contact avec une face d'extrémité axiale de l'anneau interne (14),
**en ce que** l'entretoise d'anneau interne (13) est pourvue d'une portion de bride côté entretoise d'anneau interne (13b) qui s'étend vers l'extérieur en direction radiale sur une surface circonférentielle externe côté palier de l'entretoise d'anneau interne (13),
**en ce que** le réservoir de lubrifiant (S2) est défini par une surface circonférentielle interne de l'entretoise d'anneau externe (12), une face d'extrémité axiale de la portion de bride côté entretoise d'anneau interne (13b), et la surface circonférentielle externe de l'entretoise d'anneau interne (13), et
**en ce qu'**un joint labyrinthe de grand diamètre (L1) est formé entre une surface circonférentielle externe de la portion de bride côté entretoise d'anneau interne (13b) et une surface circonférentielle interne de l'entretoise d'anneau externe (12) et permet au réservoir de lubrifiant (S2) de communiquer avec l'espace de roulement (S1).

2. Dispositif de palier (10) selon la revendication 1, **caractérisé**
**en ce que** la surface circonférentielle interne de l'entretoise d'anneau externe (12) est pourvue d'une portion de bride côté entretoise d'anneau externe (12c) qui s'étend vers l'intérieur en direction radiale sur un côté opposé du roulement (11) par rapport à la portion de bride côté entretoise d'anneau interne (13b), et
**en ce que** le réservoir de lubrifiant (S2) est pourvu entre le joint labyrinthe de grand diamètre (L1), formé entre la surface circonférentielle externe de la portion de bride côté entretoise d'anneau interne (13b) et la surface circonférentielle interne de l'entretoise d'anneau externe (12), et un joint labyrinthe de petit diamètre (L2), formé entre une surface circonférentielle interne de la portion de bride côté entretoise d'anneau externe (12c) et la surface circonférentielle externe de l'entretoise d'anneau interne (13).

3. Dispositif de palier (10) selon la revendication 1 ou 2, **caractérisé**
**en ce que** l'entretoise d'anneau externe (12) est formée avec un trou de ventilation (35) à travers lequel l'air est réapprovisionné, le trou de ventilation (35) permettant au réservoir de lubrifiant (S2) de communiquer avec l'extérieur.

4. Dispositif de palier (10) comprenant :
un roulement (11) comportant un anneau interne (14) qui présente une surface de chemin de roulement d'anneau interne (14a) sur sa surface circonférentielle externe, un anneau externe (15) comportant une surface de chemin de roulement d'anneau externe (15a) sur sa surface circonférentielle interne, et une pluralité d'éléments de roulement (16) qui sont disposés de manière roulante entre la surface de chemin de roulement d'anneau interne (14a) et la surface de chemin de roulement d'anneau externe (15a), dans lequel du lubrifiant est enfermé dans un espace de roulement (S1) entre la surface circonférentielle externe de l'anneau interne (14) et la surface circonférentielle interne de l'anneau externe (15) ; et
un élément de fixation (12, 13) qui est disposé de manière adjacente au roulement (11),
dans lequel l'élément de fixation (12, 13) comporte un réservoir de lubrifiant (S2) qui communique avec l'espace de roulement (S1),
**caractérisé**
**en ce que** le réservoir de lubrifiant (S2) comprend un lubrifiant contenant de la cire (W) qui comporte de l'huile de lubrification et de la cire et, sur base du point de liquéfaction, c'est-à-dire une température prédéterminée comprise dans une plage de température de 10 °C à 70 °C, qui peut être commuté entre un état liquide à une température dépassant le point de liquéfaction et un état semi-solide à une température inférieure ou égale au point de liquéfaction,
**en ce que** l'élément de fixation (12, 13) comprend :
une entretoise d'anneau externe (12) qui est disposée en contact avec une face d'extrémité axiale de l'anneau externe (15) ; et
une entretoise d'anneau interne (13) qui fait face à l'entretoise d'anneau externe (12) et est disposée en contact avec une face d'extrémité axiale de l'anneau interne (14),
**en ce que** le réservoir de lubrifiant (S2) est défini entre une surface circonférentielle interne de l'entretoise d'anneau externe (12) et une surface circonférentielle externe de l'entretoise d'anneau interne (13), et
**en ce que** la surface circonférentielle interne de l'entretoise d'anneau externe (12) et la surface circonférentielle externe de l'entretoise d'anneau interne (13) présentent des surfaces coniques (12h, 13e) qui se font face et ont un diamètre grandissant vers le roulement (11) de manière à former un joint labyrinthe (L) qui met en communication le réservoir de lubrifiant (S2) et l'espace de roulement (S1).

5. Dispositif de palier (10) selon la revendication 4, **caractérisé**
**en ce que** le roulement (11) comprend une paire de roulements (11),
**en ce que** l'entretoise d'anneau interne (13) comprend une paire d'entretoises d'anneau interne (13) qui sont respectivement disposées en contact avec les faces d'extrémité axiale des anneaux internes (14),
**en ce que** le réservoir de lubrifiant (S2) est défini entre la surface circonférentielle interne de l'entretoise d'anneau externe (12) et les surfaces circonférentielles externes de la paire d'entretoises d'anneau interne (13), et
**en ce que** la surface circonférentielle interne de l'entretoise d'anneau externe (12) et les surfaces circonférentielles externes de la paire d'entretoises d'anneau interne (13) présentent des surfaces coniques qui se font face mutuellement et présentent un diamètre grandissant vers les roulements (11) de manière à former une paire de joints labyrinthe qui mettent en communication le réservoir de lubrifiant (S2) et les espaces de roulement (S1).

6. Dispositif de palier (10) selon la revendication 5, **caractérisé**
**en ce que** la paire d'entretoises d'anneau interne (13) comprend des portions de bride côté entretoise d'anneau interne (13b), qui chacune présentent une surface axialement interne comme surface conique (13e) et s'étendent vers l'extérieur en direction radiale, et
**en ce qu'**une portion renfoncée annulaire est formée sur la surface circonférentielle interne de l'entretoise d'anneau externe (12) et définit le réservoir de lubrifiant (S2) .
